# EUROPEAN PATENT APPLICATION

(11) **EP 3 842 908 A1**
(43) Date of publication of application: **30.06.2021**
(21) Application number: 20177340.5
(22) Date of filing: 29.05.2020
(51) Int. Cl.: G06F 3/0482

(54) **INTERACTING METHOD FOR SIDEBAR MENU, APPARATUS AND COMPUTER-READABLE STORAGE MEDIUM**

(30) Priority: 25.12.2019 CN 201911385648; 25.12.2019 CN 201911373863; 25.12.2019 CN 201911373865; 25.12.2019 CN 201911385847; 25.12.2019 CN 201911385887; 25.12.2019 CN 201911373864; 25.12.2019 CN 201911385848; 25.12.2019 CN 201911385850
(71) Applicant: Shanghai Transsion Co., Ltd., Pudong district, Shanghai (CN)
(72) Inventor: Xiao, Ming, Shanghai, Pudong district (CN); Li, Lingzhi, Shanghai, Pudong district (CN); Lu, Weifeng, Shanghai, Pudong district (CN); Liu, Shichao, Shanghai, Pudong district (CN); Yang, Han, Shanghai, Pudong district (CN)
(74) Representative: Osterhoff, Utz

(57) **Abstract**

Disclosed are interacting methods for sidebar menu, apparatus, and storage medium thereof. The interacting methods display a shortcut panel for displaying first shortcut button icons upon receiving a triggering instruction, and displays another shortcut panel, an editing panel or an editing interface upon receiving another triggering instruction, for editing the first shortcut button icons. Before the triggering instruction is received, the first shortcut panel runs in the background, and there is no resident bar displayed on the mobile terminal, thus, users will not be affected by the shortcut panels. The purpose of eliminating the resident bar of the shortcut panel and voiding the shortcut panel affecting the users' normal use of the mobile terminal is achieved.

## Description

### CROSS-REFERENCE TO RELATED APPLICATIONS

The present application claims the benefits of: Chinese Patent Application with No. 201911385648.4; Chinese Patent Application with No. 201911373863.2; Chinese Patent Application with No. 201911373865.1; Chinese Patent Application with No. 201911385847.5; Chinese Patent Application with No. 201911385887.X; Chinese Patent Application with No. 201911373864.7; Chinese Patent Application with No. 201911385848.X; and Chinese Patent Application with No. 201911385850.7, all of which are filed on December 25, 2019, and the entire disclosure of each of which is hereby incorporated by reference, in its entirety, for all that it teaches and for all purposes.

### FIELD

The present disclosure relates to the field of interface, and in particular, to interacting methods for sidebar menu, an apparatus and a computer-readable storage medium.

### BACKGROUND

With the increased application of mobile terminals (such as mobile phones, tablet computers, etc.), people ask for more convenience in operating the mobile terminals.

In order to meet the needs of users to quickly use certain system application functions and certain applications, related art proposes a solution of using shortcut panels. However, for a shortcut panel generally keeps a resident bar resident on a screen of a mobile terminal, it greatly affects the users to normally operate the mobile terminal (such as blocking certain operational areas when the users playing games), and affects a visual effect presented by the mobile terminal (for example, when the users see a movie on the mobile terminal, certain screen area is always blocked by the resident bar, resulting in a blurred visual effect in this area). Thus the normal use of the mobile terminal has been affected by the resident bar of the shortcut panel.

The above content is only used to assist those skilled in the art in understanding the present application, and does not mean that the above content is the prior art of the present application.

### SUMMARY

The present application provides interacting methods for sidebar menu, an apparatus and a computer-readable storage medium, which solves the problem that users of mobile terminals are affected by resident bars on the mobile terminals.

In a first aspect, the present application provides an interacting method for sidebar menu applied in a mobile terminal, the interacting method includes:
displaying a first shortcut panel on a display of the mobile terminal upon receiving a first triggering instruction, the first shortcut panel being configured to display first shortcut button icons;
displaying a second shortcut panel corresponding to the first shortcut panel upon receiving the second instruction, the second shortcut panel being configured to display second shortcut button icons, the second shortcut button icons associated with the first shortcut button icons.

In some embodiments, the second shortcut button icons includes to-be-added button icons and to-be-deleted button icons, the to-be-deleted button icons include shortcut button icons corresponding to the first shortcut button icons, after displaying the second panel as receiving the first triggering instruction, the interacting method further includes:
adding a to-be-added button icon upon receiving an adding instruction of adding a shortcut button icon; or
adjusting a displaying position of a to-be-deleted shortcut button icons upon receiving an adjusting instruction of adjusting a displaying position of a shortcut button icon.

In some embodiments, the second shortcut panel includes a first region and a second region, the first region is configured to display the to-be-deleted button icons, and the second region is configured to display the to-be-added button icons, the adding step of adding a to-be-added button icon further includes:
displaying the to-be-added button icon of the second region in the first region upon receiving the adding instruction, thereby the to-be-added button icon displays as a to-be-deleted button icon.

In some embodiments, after the to-be-added button icon displays on the first region, the interacting method further includes:
displaying the to-be-added button icon. on the first shortcut panel.

In some embodiments, the interacting method further includes:
deleting a to-be-deleted shortcut button icon of the first region and displaying the to-be-deleted shortcut button icon in the second region upon receiving a deleting instruction of deleting a to-be-deleted shortcut button icon.

In some embodiments, the adjusting operation of adjusting a displaying position of a to-be-deleted button icon further includes:
obtaining a stop position of the to-be-deleted shortcut button icon where a dragging operation to drag the to-be-deleted shortcut button icon stops; and
adjusting the displaying position of the to-be-deleted shortcut button according to the stop position.

In some embodiments, the interacting method includes:
receiving a retracting instruction of retracting the second shortcut panel; and
hiding the second shortcut panel and displaying the first shortcut panel upon receiving the retracting instruction.

In some embodiments, the retracting instruction includes at least one selected from a group consisting of:
an exit instruction triggered by operating an exit mark, the exit mark being configured to trigger exiting the second shortcut panel; and
a save instruction triggered by operating a save mark, the save instruction being configured to trigger saving modifications to the shortcut button icons and exiting the second shortcut panel.

In some embodiments, shortcut buttons corresponding to the first shortcut button icons include application buttons and function buttons, the application buttons include system application buttons and other applications other than the system application buttons, the function buttons include system application function buttons and other application function button other than the system application function buttons, after the displaying of the first shortcut panel, the interacting method further includes:
displaying an application interface corresponding to an application button upon receiving a triggering instruction of triggering the application button; and
displaying a function interface corresponding to a function button upon receiving a triggering instruction of triggering the function button.

In some embodiments, the shortcut panel and the editing panel are displayed at least partially overlapped.

In some embodiments, the interacting method further includes:
hiding the first shortcut panel and editing at least one of the second shortcut button icons in the second shortcut panel; or
displaying the first short panel upon exiting an editing mode of editing the at least one of the second shortcut button icons in the second shortcut panel.

In some embodiments, the first shortcut panel includes at least a third region and a fourth region, the third region is configured to display at least one function button icon or at least one application button icon, the fourth region being is configured to be an entrance to the second shortcut panel; the interacting method further comprises:
activating a function corresponding to the function button icon or an application corresponding to the application button icon upon receiving a first instruction applied on the function button icon or the application button icon; and
displaying the second shortcut panel upon receiving a second instruction applied on the fourth region.

In some embodiments, the first shortcut panel includes a fifth region for displaying at least one function button icon or at least one application button icon.

In some embodiments, attributes of the function button icons or application button icons displayed in the third region and the fifth region are different;
or attributes of the function button icons or application button icons displayed in the third region and the fifth region are the same.

In some embodiments, attributes of the function button icons or application button icons displayed in the first region and the third region are the same.

In some embodiments,the interacting method further includes:
hiding remaining regions including the fourth region upon receiving a selection operation instruction applied on the fifth region or the third region.

In some embodiments, the interacting method further includes:
hiding the first shortcut panel upon receiving the second instruction.

In some embodiments, the interacting method further includes:
obtaining currently displayed information of the first shortcut panel; and
displaying an editing button on the first shortcut panel if the currently displayed information includes preset information.

In some embodiments, the interacting method further includes:
displaying the second shortcut panel in the first shortcut panel or at least partially overlapped on the first shortcut panel upon receiving a click operation on the editing button.

In some embodiments, the interacting method further includes:
displaying a to-be-added shortcut button icon in an unusable region of the second region after the to-be-added shortcut button icon is added in the first region.

In some embodiments, the interacting method further includes:the shortcut panel is hidden, reduced in size or adjusted in position during operation of users on the second shortcut panel.

In a second aspect, the present application provides an interacting method for sidebar menu applied in a mobile terminal, the interacting method includes:
obtaining a current display mode of the mobile terminal according to an instruction of displaying a shortcut panel,; and
displaying the shortcut panel according to the current display mode, the shortcut panel being a regular pattern.

In some embodiments, the shortcut panel is composed of a plurality of polygonal button icons, at least two of the multiple polygonal button icons are symmetrical, and displaying information of the shortcut panel includes at least one selected from a group consisting of: a displaying position of the shortcut panel, a quantity of the polygonal button icons, displaying information of each of the polygonal button icons, and an arrangement order of the polygonal button icons.

In some embodiments, only some of the plurality of polygonal button icons are displayed each time.

In some embodiments, the interacting method further includes:hiding displayed ones of the plurality of polygonal button icons and displaying hidden ones of the plurality of polygonal button icons according to a rotation operation applied on the displayed ones.

In some embodiments, one of the displayed ones is rotated by the rotation operation, or some of the displayed ones are rotated by the rotation operation.

In some embodiments, when only one of two symmetrical polygonal button icons is displayed, functions corresponding to the symmetrical polygonal button icons are related to each other.

In some embodiments, when only one of two symmetrical polygonal button icons is displayed, an additional or related function is displayed in a reserved position of the displayed one.

In some embodiments, the current display mode is at least one selected from a group consisting of: a reading mode, a photographing mode, a video mode, and a telephone mode, displaying the shortcut panel includes:
determining a displaying position of the shortcut panel according to the current display mode; and
displaying the shortcut panel according to the displaying position.

In some embodiments, the shortcut panel is a three-dimensional magic cube.

In some embodiments, the current display mode is to display an application interface, displaying the shortcut panel includes:
determining at least one first target panel in magic cube panels of the three-dimensional magic cube; and
displaying the at least one first target panel.

In some embodiments, before obtaining a current display mode, the interacting method includes:
disposing at least one button icon corresponding to at least one application or function on the three-dimensional magic cube according to a preset operation; and
after the displaying of the at least one first target panel, the interacting method includes:
   obtaining and activating an application or a function corresponding to the first target panel according to another preset operation applied on the at least one first target panel.

In some embodiments, displaying the at least one first target panel includes:
obtaining degrees of association between the magic cube panels and the application interface;
determining the at least one first target panel according to the degrees of association; and
displaying the at least one first target panel.

In a third aspect, the present application provides an apparatus, the apparatus includes a memory, a processor and an operation program for shortcut panels stored in the memory, the operation program implementing an interacting method for sidebar menu as described above when being executed by the processor.

In a fourth aspect, the present application provides an computer-readable storage medium, the storage medium is configured to storing an operation program for shortcut panels, the operation program implementing an interacting method for sidebar menu as described above when being executed by a processor.

According to the interacting methods for sidebar menu, the apparatus, and the storage medium provided by the present application, a first shortcut panel is displayed on a display of a mobile terminal upon receiving a first triggering instruction, the first shortcut panel being configured to display first shortcut button icons; a second shortcut panel corresponding to the first shortcut panel is displayed upon receiving the second instruction, the second shortcut panel being configured to display second shortcut button icons, the second shortcut button icons include shortcut button icons corresponding to the first shortcut button icons. Before the first triggering instruction is received, the first shortcut panel runs in the background, and there is no resident bar displayed on the mobile terminal, thus, users will not be affected by the shortcut panels. The purpose of eliminating the resident bar of the shortcut panel and voiding the shortcut panel affecting the users' normal use of the mobile terminal is achieved.

### BRIEF DESCRIPTION OF THE DRAWINGS

FIG. 1 is a schematic flowchart of a first embodiment of an interacting method for sidebar menu according to the present disclosure.
FIG. 2 is a schematic interface showing a first shortcut panel according to an interacting method for sidebar menu of the present disclosure.
FIG. 3 is a schematic interface showing another first shortcut panel according to an interacting method for sidebar menu of the present disclosure.
FIG. 4 is a schematic interface showing a shortcut panel completely displayed on a terminal interface according to an interacting method for sidebar menu of the present disclosure.
FIG. 5 is a schematic interface showing a shortcut panel partially displayed on a terminal interface according to an interacting method for sidebar menu of the present disclosure.
FIG. 6 is a schematic interface showing a toggle-type shortcut interface according to an interacting method for sidebar menu of the present disclosure.
FIG. 7 is a schematic interface showing another toggle-type shortcut interface according to an interacting method for sidebar menu of the present disclosure.
FIG. 8 is a schematic interface showing still another toggle-type shortcut interface according to an interacting method for sidebar menu of the present disclosure.
FIG. 9 is a schematic interface showing still another toggle-type shortcut interface according to an interacting method for sidebar menu of the present disclosure.
FIG. 10 is a schematic interface of a first shortcut panel according to an interacting method for sidebar menu of the present disclosure;
FIG. 11 is a schematic interface of a portion of a second shortcut panel according to an interacting method for sidebar menu of the present disclosure;
FIG. 12 is a schematic interface of another portion of a second shortcut panel according to an interacting method for sidebar menu of the present disclosure;
FIG. 13 is a schematic flowchart of a second embodiment of an interacting method for sidebar menu according to the present disclosure;
FIG. 14 is a schematic interface showing a shortcut panel according to an interacting method for sidebar menu of the present disclosure.
FIG. 15 is a schematic flowchart of a sixth embodiment of an interacting method for sidebar menu according to the present disclosure.
FIG. 16 is a schematic flowchart of a ninth embodiment of an interacting method for sidebar menu according to the present disclosure.
FIG. 17 is a schematic interface of an editing panel according to an interacting method for sidebar menu of the present disclosure.
FIG. 18 is a schematic interface of another editing panel according to an interacting method for sidebar menu of the present disclosure.
FIG. 19 is a schematic flowchart of a fourteenth embodiment of an interacting method for sidebar menu according to the present disclosure;
FIG. 20 is a schematic interface showing a displaying position of a shortcut panel according to an interacting method for sidebar menu of the present disclosure.
FIG. 21 is a schematic interface showing another displaying position of a shortcut panel according to an interacting method for sidebar menu of the present disclosure.
FIG. 22 is a schematic interface showing displaying of polygonal button icons according to an interacting method for sidebar menu of the present disclosure.
FIG. 23 is a schematic interface showing a first target panel of a magic cube according to an interacting method for sidebar menu of the present disclosure.
FIG. 24 is a schematic interface showing another first target panel according to an interacting method for sidebar menu of the present disclosure.
FIG. 25 is a schematic diagram of an apparatus according to an embodiment of the present disclosure.

The realization of the purpose, functional characteristics and advantages of the present disclosure will be further explained with reference to the embodiments and the drawings.

### DETAILED DESCRIPTION OF THE EMBODIMENTS

It should be understood that the specific embodiments described herein are only used to explain the present disclosure and are not intended to limit the present disclosure.

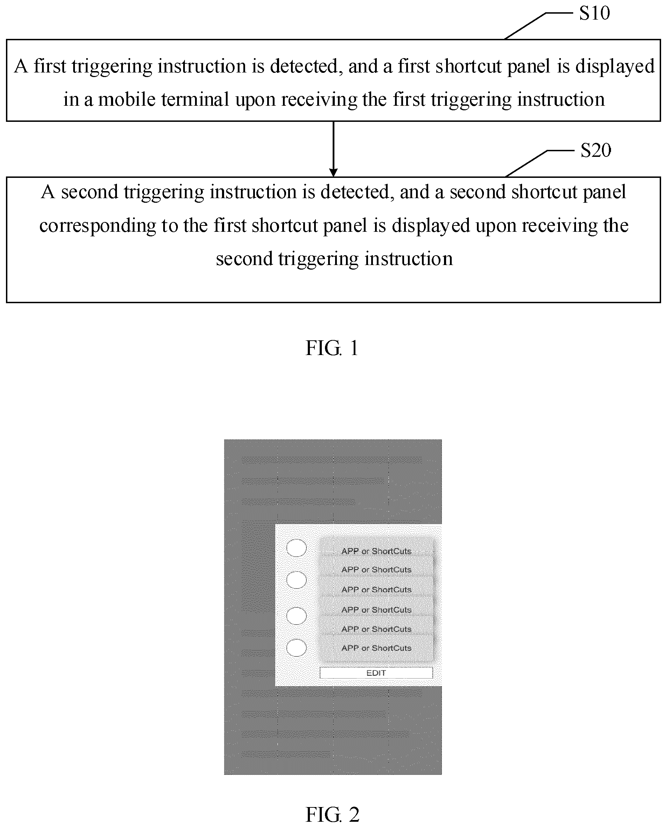

The present disclosure provides an interacting method for sidebar menu. Referring to FIG. 1, FIG. 1 shows a schematic flowchart of a first embodiment of an interacting method for sidebar menu.

The present embodiment is a first embodiment of an interacting method for sidebar menu. It should be noted that although a logical sequence of steps is shown in the flowchart, in certain cases, all the steps can be performed in an order different from the logical sequence shown here. The interacting method for sidebar menu can be applied in various mobile terminals. The mobile terminals include, but are not limited to, PADs (Portable Android Devices) and mobile phones. For the convenience of describing, each step of the interacting method is described without an executive subject which carries out the step. The interacting method includes the following steps.

In step S10, a first triggering instruction is detected, and a first shortcut panel (i.e., a first sidebar menu) is displayed in a mobile terminal upon receiving the first triggering instruction, the first shortcut panel being configured to display first shortcut button icons.

Specifically in this embodiment, when the first triggering instruction is detected, the first shortcut panel is displayed on the mobile terminal. The first triggering instruction may be a voice instruction, a gesture instruction, or the like. The first shortcut panel is used to display the first shortcut button icons. The first shortcut button icons include application button icons or function button icons, or both application button icons and function button icons. Pulling up the first shortcut panel by the voice instruction is generally used when it is more convenient to use voice instructions to operate subsequent applications, such as to operate a screenshot function of system tools. The first shortcut panel can also be pulled up by the gesture instruction. For example, a user can carry out a sliding operation by sliding his or her finger from an edge of a screen of the mobile terminal toward a center of the screen to pull up the first shortcut panel. The sliding operation is considered as a gesture instruction of pulling up the first shortcut panel when the sliding operation continues for a predetermined time period or goes ahead for a predetermined distance. After the first shortcut panel is pulled up by the gesture instruction, it is convenient for the user to edit texts, or other functions that can be performed by gesture operations.

Furthermore, in the present embodiment, shortcut buttons corresponding to the first shortcut button icons include application buttons and function buttons.

In step S30, a triggering instruction of triggering an application button is detected, and an application interface corresponding to the application button is displayed.

In step S40, a triggering instruction of triggering a function button is detected, and a function interface corresponding to the function button is displayed.

Specifically in this embodiment, shortcut buttons corresponding to the first shortcut button icons include application buttons and function buttons. The application buttons include system application buttons and other application buttons. The function buttons include system application function buttons and other application function buttons. When a triggering instruction for triggering one of the application buttons is detected, an application interface corresponding to the application button is displayed. When a triggering instruction for triggering one of the application function buttons is detected, a function interface of an application corresponding to the function button is displayed. The other application buttons are application buttons other than the system application buttons, for example, the other application buttons can be application buttons of applications installed by the users, such as the "Alipay" application.

Specifically in this embodiment, referring to FIG. 2, an example of the first shortcut panel is shown. The "circle" region on the panel is configured to display the system application button icons, the system function button icons, or a combination of the system application button icons and the system function button icons. The bookmark region on the panel is configured to display names of the other applications, the other application functions buttons, or a combination of them. In another situation, the bookmark region is configured to display the system application button icons, the system function button icons, or a combination of them, and the "circle" region is configured to display the other application button icons, the other function button icons, or a combination of them. In still another situation, the "circle" region or the bookmark region are both configured to display the system application button icons, the system function button icons, the other application button icons, the other function button icons, or a combination of them. Accordingly, if the "circle" region is configured to display first shortcut button icons of commonly used, the bookmark region is configured to display certain first shortcut button icons of not commonly used, but recommended. On the other hand, if the bookmark region is configured to display the commonly used first shortcut button icons, the "circle" region is configured to display the not commonly used, but recommended first shortcut button icons.

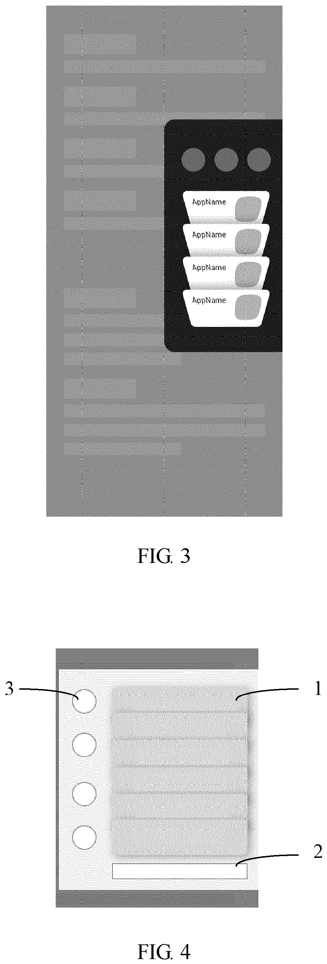

Referring to FIG. 3, another example of the first shortcut panel is shown. the "AppName" region in the bookmark region can be used to display the first shortcut button icons of commonly used and the first shortcut button icons that are not commonly used but recommended.

In yet another example of the first shortcut panel, when the mobile terminal receives a displaying instruction, the mobile terminal firstly determines the first shortcut panel that needs to be displayed according to the displaying instruction, and then display the first shortcut panel according to a preset layout way. According to the preset layout way, the first shortcut panel is divided into at least two regions including a fixed region and a dynamic region. The first shortcut button icons are displayed in the fixed region and/or the dynamic region, so that the users can quickly and conveniently operate shortcut functions. The contents displayed in the fixed region can not be adjusted or modified (such as be deleted, moved, etc.) by the users, and the contents in the fixed region are fixed at their respective positions. The contents displayed in the dynamic region can be adjusted or modified (such as be deleted, moved, etc.) by the users.

In this embodiment, since the mobile terminal itself carries various system applications and system application functions, several of those system applications and system application functions may not be used or not frequently used by the users, while others of those system applications and system application functions may be frequently used by the users, a predetermined number of system application button icons and system function button icons respectively corresponding to the predetermined number of frequently used system applications and system application functions can be obtained in a specific time period. The predetermined number of system application button icons and system function button icons can be displayed in the fixed region. The displaying of those system application button icons and system function button icons is based on a size of the fixed region and a preset arrangement way, such as a proportional arrangement way. It should be noted that the fixed region displays at least one system application button icon or at least one system function button icon. The system application button icons and the system function button icons are configured to provide entries to corresponding system applications and system application functions. The users can select any available icon to represent a system application or a system application function.

At least one other application button icon corresponding to at least one other application or at least one other function button icon corresponding to at least one other application function may be displayed in the dynamic region of the first shortcut panel. The dynamic region can display button icons corresponding to the other applications and any functions in the other applications. For example, the dynamic region may display a button icon corresponding to a friend chat page of a chat application. When the users operate a button icon corresponding to a function of an application in the dynamic region, he or she can directly open a function page of the application.

In this embodiment, the number of the other application button icons and the other function button icons displayed in the dynamic region as well as an occupied size of each of icons can be determined according to actual needs. In addition, various button icons can be placed with one button icon partially overlapped on an adjacent one in the dynamic region according to the users' actual needs. The dynamic region displays at least one other application button icon or at least one other function button icon. The other application button icon is used to provide an entrance to a corresponding other applications. The other function button icon is used to provide to an entrance to a corresponding function of an other application function. The users can select any available button icon to represent an other application or an other application function. In this embodiment, the button icons used to represent the other applications or the other application functions are different from the button icons used to represent the system applications or the system application functions, in order to facilitate the users to distinguish and operate each of the button icons.

In addition, to assist in understanding the displaying manner of the first shortcut panel in this embodiment, examples are further given below.

Referring to FIG. 4, a still another example of the first shortcut panel is shown. In this example, label "1" indicates an other application button icon or an other function button icon, label "2" indicates a panel configuration button icon, and label "3" indicates a system application button icon or a system function button icon. The first shortcut panel is divided into two regions: a left region and a right region. The left region is a fixed region in which at least one system application button icon or at least one system function button icon 3 is located. The right region is a dynamic region in which a plurality of other application button icons or other function button icons 1 are located with one button icon partially overlapped on an adjacent one. The user can slide each of the icons 1 in the dynamic region. The panel configuration button icon 2 is located at the bottom of the first shortcut panel. When the users click the panel configuration button icon 2, a panel configuration interface for the users to change or move the icons 1 is displayed.

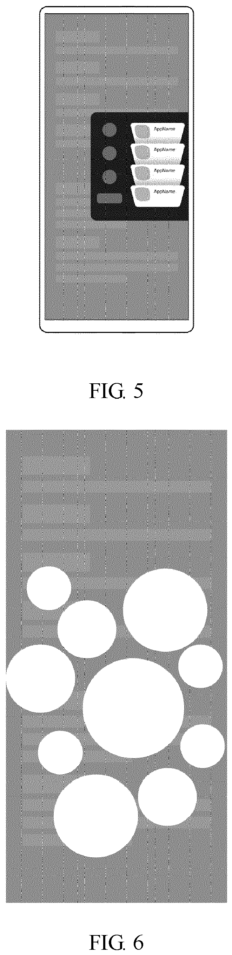

All the button icons on the first shortcut panel are entrances for applications or application functions. After the users operate such as click one of the button icons, the shortcut panel is automatically folded, and the corresponding application or application function is activated. Furthermore in this embodiment, the first shortcut panel can be displayed and occupy the full screen, or occupy partly of the screen of the mobile terminal as shown in FIG. 5.

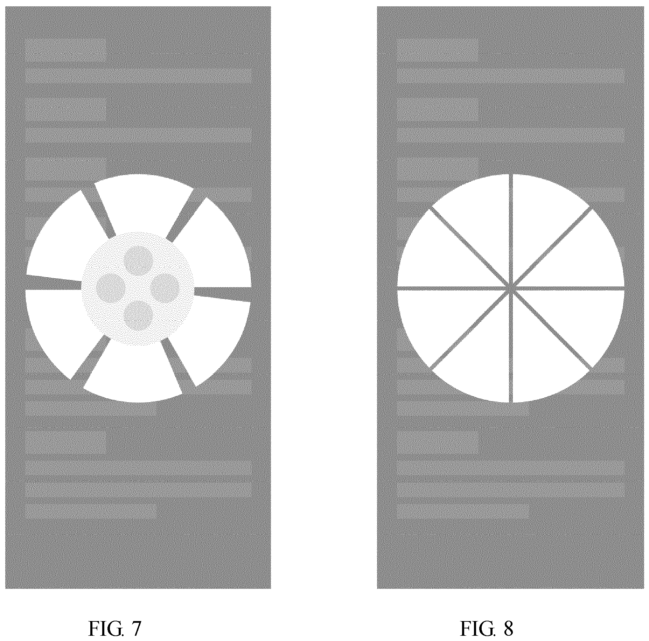

In yet another example of the first shortcut panel, the first shortcut panel is a toggle-type shortcut interface. When a toggle-type shortcut interaction device detects an interaction condition, the toggle-type shortcut interaction device displays a toggle-type shortcut interface corresponding to the detected interaction condition. The interaction condition can be at least one of the following: a sliding operation of the users sliding from the edge of the screen of the mobile terminal toward the center of the screen, a voice instruction from the users, or a shaking operation of the users shaking the mobile terminal. The first shortcut button icons can be arranged in the toggle-type shortcut interface in a form of a turntable, or in a form of scattered points. Referring to FIG. 6, in an embodiment, a plurality of flat turntables are disposed on the toggle-type shortcut interface. Referring to FIGS. 7-9, in another embodiment, a three-dimensional turntable is disposed on the toggle-type shortcut interface. Especially in this embodiment, the three-dimensional turntable is a gear turntable. The first shortcut button icons are disposed on teeth of the gear turntable, and a rotation axis of the gear turntable is parallel to the screen. Referring to FIG. 7, in an embodiment, background colors of the first shortcut button icons may be alternated, or the background colors of the first shortcut button icons may be gradually lightened or gradually darkened. When the users rotate the first shortcut button icons on the toggle-type shortcut interface and rotates to the last first shortcut button icon, the last first shortcut button icon prompts the user that it is the last one of the rotatable first shortcut button icons, or it is the end of the rotatable first shortcut button icons.

In an embodiment, when the toggle-type shortcut interaction device detects a sliding shortcut operation instruction triggered by a user using a sliding operation, the toggle-type shortcut interaction device displays a toggle-type shortcut interface corresponding to the sliding shortcut operation instruction. The sliding shortcut operation instruction can be triggered by the user sliding from an upper, lower, left or right border of the screen toward the center of the screen, or triggered by the user sliding from an endpoint of either border of the screen toward the center of the screen.

In another embodiment, when the users need to open an toggle-type shortcut interface, the users may speak or send a voice instruction to the toggle-type shortcut interaction device to command the toggle-type shortcut interaction device to open the toggle-type shortcut interface. The voice instruction may be like, such as "toggle-type shortcut interaction", "shortcut function", "shortcut", or "shortcut interaction". The toggle-type shortcut interactive device receives the voice instruction from the users, and recognizes the voice instruction. When the voice instruction is one of preset voice instructions which are preset to trigger toggle-type shortcut interfaces, the toggle-type shortcut interactive device generates a voice shortcut operation instruction according to the voice instruction from the users, and displays a toggle-type shortcut interface corresponding to the voice shortcut operation instruction.

In still another embodiment, the users can shake the toggle-type shortcut interaction device to open a toggle-type shortcut interface. A vibration sensor of the toggle-type shortcut interaction device is used to detect shakings of the toggle-type shortcut interaction device. When the vibration sensor detects that the users continuously shake the toggle-type shortcut interaction device within a preset time period, the toggle-type shortcut interaction device generates a shaking shortcut operation instruction, and displays a toggle-type shortcut interface corresponding to the shaking shortcut operation instruction.

Specifically in the embodiment, the users can click an function (such as a screen capture function, a screen recording function, a setting function, etc.) button icon or an application button icon in the first shortcut panel. After the users clicks a button icon, a dynamic effect of opening a corresponding function is displayed to the users. For example, after the users click an application button icon to open a corresponding application, an application interface of the application is panned upward from the application button icon area and enlarged at the same time until the application interface occupies the full screen.

We all know that when the users use mobile terminals, they usually have certain applications that are frequently used in daily life, such as social applications, news applications, financial management applications, and the like. For an application, it may be equipped with a lot of functions, and among them certain functions may be used frequently. For example, the users may use the quick payment (such as QR code payment) of the Alipay application frequently in daily life. The users may usually open the Alipay applicatiom just for quick payment. After the payment is finished, the users need to close the Alipay application. Each time the users need to open the Alipay application for a quick payment, and the users then need to close the Alipay application after the payment is finished, which cause unnecessary power loss and waste the users' time. Therefore, after the other function button icon corresponding to the QR code payment function of the Alipay application is located on the first shortcut panel, when the users need to use the QR code payment function of the Alipay application, they can directly open the QR code payment interface of the Alipay application by operating such as clicking the button icon corresponding to the QR code payment function on the first shortcut panel, which is very convenient.

Specifically in this embodiment, referring back to FIG. 2, when the users want to use the first shortcut panel, the first shortcut panel can be pulled up through a first triggering instruction, such as a voice instruction, and displayed on the mobile terminal. The first shortcut panel is used to display the first shortcut button icons. A display area for displaying the first shortcut button icons is divided into two regions, one (i.e., the "circle" region) is for displaying the system application button icons and the system function button icons, and the other (i.e., the bookmark region) is for displaying the other application button icons and the other function button icons. In another embodiment, the "circle" region is configured for displaying the other application button icons and the other function button icons. Accordingly, the "bookmark" region is used for displaying the system application button icons and the system function button icons. In still another embodiment, the "circle" region and the "bookmark" region can both be used to display the other application button icons and the other function button icons. Accordingly, if the "circle" region is configured to display certain first shortcut button icons of commonly or frequently used, the "bookmark" region is configured to display certain first shortcut button icons that are not commonly used but recommended. On the other hand, if the "bookmark" regions are used to display certain first shortcut button icons of commonly or frequently used, the "circle" regions are used to display certain first shortcut button icons of rarely used but recommended. The first shortcut panel also includes an "EDIT" button icon for triggering a panel editing function for editing contents (i.e., button icons) on the first shortcut panel. In the embodiment, when a user triggers a system application button icon or an other application button icon, for example, when the user clicks or long-presses the system application button icon or the other application button icon, an application interface corresponding to the system application button icon or the other application button icon is opened in a preset display way. When the user triggers a system function button icon or an other function button icon, for example, when the user clicks or long-presses the system function button icon or an other function button icon, a function interface corresponding to the system function button icon or the other function button icon is opened in the preset display way. In the embodiment, the preset display way is a dynamic display way such as a gradation display way or a shutter display way.

In step S20, a second triggering instruction is detected, and a second shortcut panel (i.e., a second sidebar menu) corresponding to the first shortcut panel is displayed upon receiving the second instruction, the second shortcut panel being configured to display second shortcut button icons. The second shortcut button icons are associated with the first shortcut button icons.

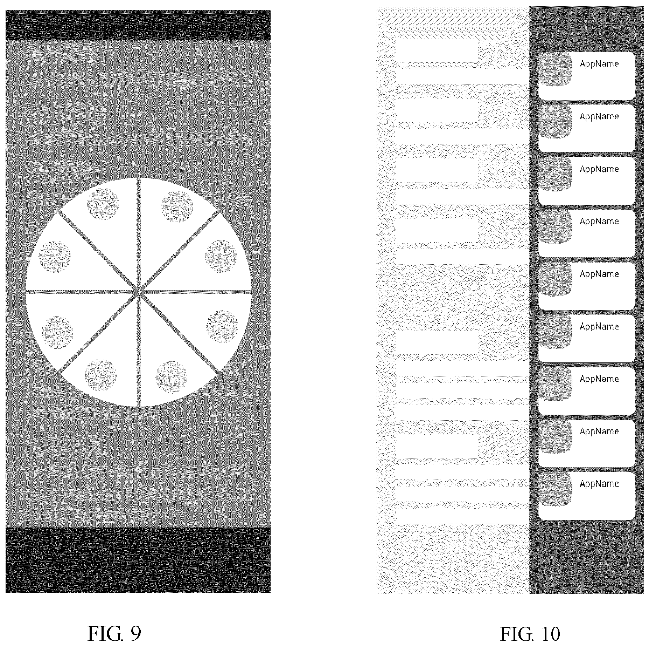

Specifically in the embodiment, based on the first shortcut panel shown in FIG. 3 or FIG. 10, when a second triggering instruction is detected, a second shortcut panel corresponding to the first shortcut panel is displayed. The second triggering instruction may be generated upon operations of the users, such as the users' long-pressing on a blank display area (i.e., the area where no button icon is displayed) of the first shortcut panel, or upon the users' voice instructions. The second shortcut button icons include shortcut button icons corresponding to the first shortcut button icons on the first shortcut panel. The second shortcut panel is configured to change contents of the first shortcut panel. The second shortcut panel can be displayed in various ways, for example, the second shortcut panel can be overlaid on the first shortcut panel, or be located side by side with the first shortcut panel. For another example, when the second shortcut panel is displayed, the first shortcut panel is closed.

Furthermore, the second shortcut button icons include shortcut button icons to be added (hereinafter referred to as "to-be-added button icons") to the first shortcut panel and shortcut button icon to be deleted (hereinafter referred to as "to-be deleted button icons") from the first shortcut panel.

In step S50, an adding instruction of adding a shortcut button icon is detected, and one of the to-be-added button icons is accordingly added to the first shortcut panel.

Specifically in the embodiment, the contents of the first shortcut panel can be changed by the second shortcut panel. For example, after an adding instruction of adding a shortcut button icon is detected, one of the to-be-added button icons is added to the first shortcut panel.

In the embodiment, the second shortcut panel includes a first region and a second region, the first region is configured to display the to-be-deleted button icons, and the second region is configured to display the to-be-added button icons. In the embodiment, step S50 further includes at least one of steps S51 and S52.

In step S51, an adding instruction of adding a shortcut button icon is detected, and a to-be-added button icon is moved from the second region to the first region, which means this button icon has been added on the first shortcut panel and displays as a to-be-deleted button icon which can be deleted from the first shortcut panel. All the button icons in the first region of the second shortcut panel is displayed on the first shortcut panel.

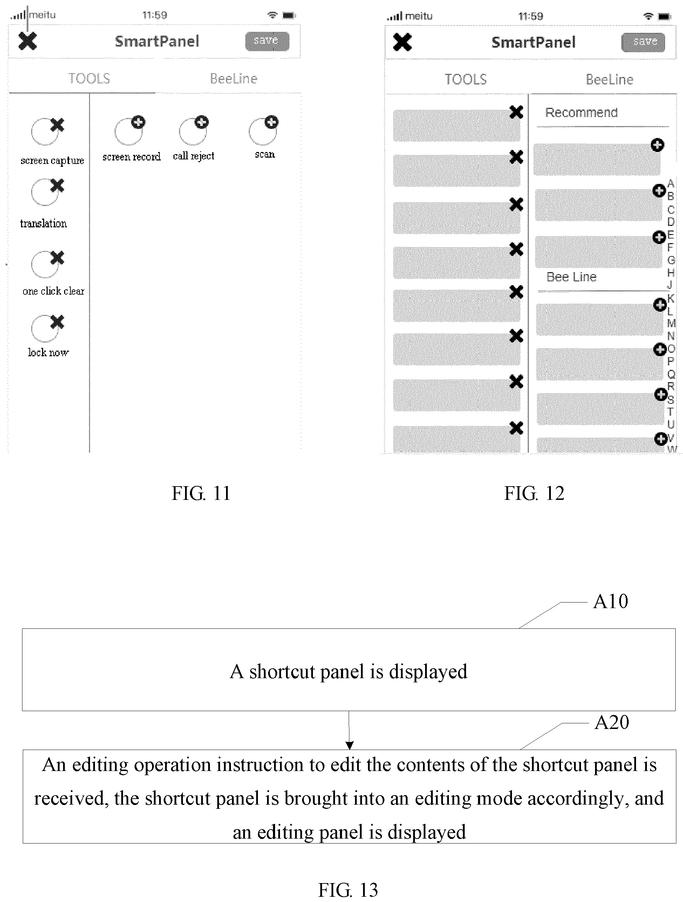

Specifically referring to FIG. 11 and FIG. 12, "SmartPanel" is an example of the second shortcut panel. The SmartPanel includes a "TOOLS (toolbar)" column and a "BeeLine (straight line)" column. The "TOOLS" column and the "BeeLine" column respectively include a first region and a second region. In addition, the second region of the "BeeLine" column is also divided into a "Recommend" column and a "Bee Line" column. The users can quickly find a shortcut button icon that they want to add to the first shortcut panel according to the first letters of specific names of the shortcut butt on icons in the "Recommend" column. The "BeeLine" column is configured to recommend to the users addible application button icons and function button icons. The users can switch between the "TOOLS" column and the "Beeline" column by clicking a "TOOLS" logo of the "TOOLS" column or a "BeeLine" logo of the "Beeline" column, or by sliding a blank area in the "TOOLS" column to the left or sliding a blank area in the "Beeline" column to the right.

Specifically in the embodiment, after the second shortcut panel is opened, whether in the "TOOLS" column or the "Beeline" column, the shortcut button icons in the second region can be moved to the first region under the operations of the users. To add a shortcut button icon in the second region to the first region, the users can, for example, sliding the shortcut button icons in the second region to the left clicking an adding mark of the shortcut button icon, or long-pressing or sliding the shortcut button to cause a hidden adding mark of the shortcut button icon appear, and then clicking the adding mark to move the shortcut button icon to the first region.

Furthermore, in the embodiment, step S70 is carried out after step S51.

In step S70, the to-be-added shortcut button icon is displayed on the first shortcut panel.

Specifically in the embodiment, the first shortcut panel displays the shortcut button icons of the first region of the second shortcut button icons. When the users updates the shortcut button icons of the first region of the second shortcut panel, the shortcut button icons on the first shortcut panel are updated accordingly. For example, the users may open the second shortcut panel to move a particular to-be-added shortcut icon from the second region to the first region. Before the second shortcut panel is used for such an editing or change, the particular shortcut button icon is not displayed on the first shortcut panel. After the users open the second shortcut panel and move the particular to-be-added shortcut button icon from the second region to the first region, the particular to-be-added shortcut button icon is displayed on the first shortcut panel as well as those already exist on the first shortcut button icon before the users open the second shortcut panel to carry out such an editing or change.

In step S60, an adjusting instruction of adjusting a displaying position of a to-be-deleted shortcut button icon is detected, and the displaying position of the to-be-deleted shortcut button icons is adjusted. The to-be-delete shortcut button icons correspond to or are associated wih the first shortcut button icons.

Specifically in the embodiment, when an adjusting instruction of adjusting a displaying position of a to-be-deleted shortcut button icon is detected, a displaying position of a shortcut button icon in the first region of the second shortcut panel is adjusted accordingly. The to-be-deleted shortcut button icons correspond to or are associated with the first shortcut button icons.

Furthermore, the step S60 includes steps S61 and S62.

In step S61, a dragging operation to a to-be-deleted shortcut button icon in the first region is detected, and a stop position of the to-be-deleted shortcut button icon is obtained. The stop position is where the dragging operation stops.

Specifically in the embodiment, when a dragging operation of a user applied to a to-be-deleted shortcut button icon in the first region is detected, it means that the user wants to adjust the displaying position of the to-be-deleted shortcut button icon in the first region. When the user stops dragging the to-be-deleted shortcut button icon, the position where the user stop dragging the to-be-deleted shortcut button icon is the stop position of the to-be-deleted shortcut button icon in the first region.

In step S62, the displaying position of the to-be-deleted shortcut button icon in the first region is adjusted according to the stop position.

Specifically in the embodiment, the displaying position of the to-be-deleted shortcut button icon in the first region is adjusted according to the stop position of the to-be-deleted shortcut button icon. That is, a user can drag a to-be-deleted shortcut button icon to any position of the first region, and the to-be-deleted shortcut button icon stays at the position the user wants, thus to adjust the displaying position of a corresponding first shortcut button icons in the first shortcut panel.

Furthermore, the interacting method further includes step S80.

In step S80, a deleting instruction of deleting a to-be-deleted shortcut button icon is detected, and the to-be-deleted shortcut button icon located in the first region is deleted from the first region and appears in the second region.

Specifically in the embodiment, when a deleting instruction of deleting a to-be-deleted shortcut button icon is detected, the to-be-deleted shortcut button icon in the first region is deleted from the first region and displayed in the second region. In an alternative embodiment, the shortcut button icon is deleted from the first region but not appears in the second region, which means the users are not going to use the shortcut button icon any more. In the embodiment, whether a shortcut button icon deleted from the first region is moved to the second region or not is predetermined by the users or is implemented according to the users' instruction. In order to facilitate the users to delete a shortcut button icon, the users can give a sliding instruction by sliding the shortcut button icon in the second region to right or left, give a first deleting instruction by clicking a common deleting mark or a permanent deleting mark of the shortcut button icon, or give a second deletion instruction by long-pressing or moving the shortcut button icon to cause a hidden common deleting mark or permanent deleting mark of the shortcut button icon appear, and clicking the common deleting mark or the permanent deleting mark, to complete the deletion of the shortcut button icon from the second region. In the embodiment, if the sliding instruction of sliding the shortcut button icon in the second region to left or the first or second deletion instruction corresponding to the permanent deleting mark is detected, the shortcut button icon is deleted from the first region and not displayed in the second region. If the sliding instruction of sliding the shortcut button icon in the second region to right or the first or second deletion instruction corresponding to the common deleting mark is detected, the shortcut button icon is deleted from the first region and displayed in the second region. The shortcut button icon accordingly becomes a to-be-added shortcut button icon.

Furthermore, the interacting method for the shortcut panel further includes step S90.

In Step S90, a retracting instruction of retracting the second shortcut panel is received.

Specifically in the embodiment, a retracting instruction of retracting the second shortcut panel is received from the users. The retracting instruction includes an exit instruction triggered by operating an exit mark and a save instruction triggered by operating a save mark when one or more shortcut button icons in the second shortcut panel are deleted, added or adjusted. Specifically in the embodiment, the exit mark (such as an "X" icon) to exit the second shortcut panel can be disposed in the second shortcut panel, so that when the users does not want to save the modifications after adding or deleting shortcut button icons, or adjusting displaying positions of shortcut button icons, they can exit the second shortcut panel without saving the modifications. To prevent the users' accidentally touchings from resulting in exit of the second shortcut panel, the users can be prompted whether to save the modifications in the second shortcut panel after the users click the exit mark. The save mark is also disposed in the second shortcut panel (the save mark is a virtual button labeled with "Save"). The users give a save instructions by clicking the "Save" virtual button to save modifications after deletions, additions or adjustments of the shortcut button icons in the second shortcut panel.

In Step S100, the second shortcut panel is hidden and the first shortcut panel is displayed according to the retracting instruction of retracting the second shortcut panel.

Specifically in the embodiment, after the users finish adding or deleting the shortcut button icons, or adjusting the displaying positions of the shortcut button icons, the users can save the modifications by clicking the save mark to exit the second shortcut panel. After exiting from the second shortcut panel, the second shortcut panel is hidden and the first shortcut panel appears, so that the user can access the corresponding functions or applications through the modified first shortcut button icons. In the embodiment, hiding the second shortcut panel causes the second shortcut panel not to be displayed but to run in the background of the mobile terminal. After the users exit the first shortcut panel or open a function or an application through a corresponding first shortcut button icon in the first shortcut panel, the first shortcut panel and the second shortcut panel are both closed. In another embodiment, after exiting out the second shortcut panel, the second shortcut panel is closed and the first shortcut panel is displayed. After the users exit the first shortcut panel or open a function or an application through a corresponding first shortcut icon in the first shortcut panel, the first shortcut panel is closed.

In the embodiment, when the first triggering instruction is detected, the first shortcut panel is displayed on the mobile terminal, and the first shortcut panel is configured to display the first shortcut button icons. When the second triggering instruction is detected based on the first shortcut panel, the second shortcut panel corresponding to the first shortcut panel is displayed, and the second shortcut panel is configured to display the second shortcut button icons. The second shortcut button icons include shortcut button icons corresponding to the first shortcut button icons. Before the first triggering instruction is detected, the first shortcut panel runs in the background, and there is no resident bar displayed on the mobile terminal, thus, the users will not be affected by the shortcut panels. The purpose of eliminating the resident bar of the shortcut panel and voiding the shortcut panel affecting the users' normal use of the mobile terminal is achieved.

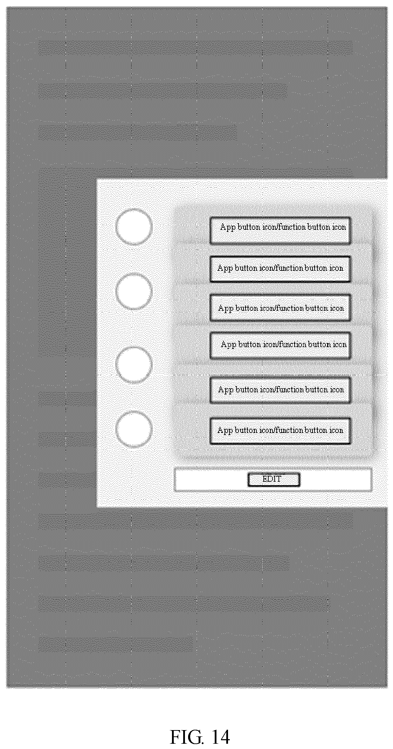

Referring to FIG. 13 and FIG. 14, an interacting method of shortcut panels in a second embodiment of the present disclosure can be applied in various mobile terminals. The mobile terminals include, but are not limited to, PAD (Portable Android Device) and mobile phones. For the convenience of describing, each step of the interacting method is described without an executive subject which carries out the step. The interacting method includes the following steps.

In step A10, a shortcut panel is displayed, the shortcut panel includes at least one function button icon or at least one application button icon.

Specifically in this embodiment, the shortcut panel displays at least one function button icon or at least one application button icon. The at least one application button icon includes at least one system application button icon or at least one other application button icon. The at least one function button icon includes at least one system function button icon or at least one other function button icons. The other applications are those which installed by users other than the system applications. Function button icons and application button icons can be displayed in the shortcut panel in two ways. When there are a small number of function button icons and application button icons to be displayed, all the function button icons and the application button icons are displayed in a tiled manner in the shortcut panel at the same time. When there are a large number of function button icons and application button icons to be displayed, the function button icons and the application button icons are displayed in a stacked manner. The stacked manner can be a list manner in which all function button icons and application button icons are placed in a list. Different function button icons and application button icons can be displayed by swiping the list. The stacked manner can either be a card manner. Each of the function button icons and application button icons is displayed as a card, and the cards are displayed in an stacked way on the shortcut panel. In the tiled manner, all contents of the shortcut panel are displayed in the shortcut panel. In the stacked mode, the displayed contents of the current shortcut panel are the current displayed function button icons and application button icons. Generally, the displayed function button icons and application button icons form only a part of the function button icons and application button icons that need to be displayed in the shortcut panel. Referring to FIG. 14, each of the application button icons and the function button icons may be displayed in the shortcut panel.

In step A20, an editing operation instruction of editing the contents of the shortcut panel is received, the shortcut panel is brought into an editing mode accordingly, and an editing panel is displayed.

The editing operation instruction includes at least one of the following: a button instruction, a voice instruction, and a gesture instruction.

Specifically in the embodiment, when the editing operation instruction is a button instruction, the button instruction is generated according to the users' operations to an editing button. The editing button is displayed only when the displayed contents of the current shortcut panel includes certain preset information. The preset information is that the last one of the function button icons and application button icons appears in the shortcut panel. The editing button is displayed accompanying the appearance of the last function button icon or application button icon. When the user clicks the editing button to generate the button instruction, the shortcut panel enters the editing mode, and the corresponding editing panel is displayed. Alternatively, the editing button may be always displayed on the shortcut panel, and the shortcut panel enters the editing mode in response to the editing operation instruction generated by the users clicking the editing button. When the editing operation instruction is a voice instruction, the voice instruction is generated by obtaining the users' voice and analyzing semantic information of the voice. If there exists "editing the shortcut panel" or similar semantic information in the voice, the shortcut panel enters the editing mode in response to the voice instruction. When the editing operation instruction is a gesture instruction generated by such as long-pressing the shortcut panel, the shortcut panel enters the editing mode in response to the gesture instruction. There are two editing modes for the shortcut panel, one is a full-screen editing mode and the other is a pop-up editing mode. The full-screen editing mode occupies the entire display area of the mobile terminal as the editing area for editing the shortcut panel, and the pop-up editing mode displays the editable contents of the shortcut panel in the display area of the shortcut panel.

In this embodiment, displaying the shortcut panel, the shortcut panel includes at least one function button icon or application button icon. When an editing operation instruction of editing the shortcut panel is received, the shortcut panel enters the editing mode and displayed the editing panel. In this embodiment, the shortcut panel is initially displayed, and the editing panel is then displayed when receiving the editing operation instruction. The users can switch between the shortcut panel and the editing panel to facilitate the users' editing operations to the shortcut panel.

Referring to FIG. 14, a third embodiment of an interacting method for sidebar menu is provided based on the second embodiment of the present disclosure. In the third embodiment, the shortcut panel and the editing panel are displayed at least partially overlapped. The interacting method of shortcut panels includes at least one of the following steps.

In step A30, function button icons and application button icons are edited in the editing panel, with the shortcut panel being hidden.

In step A40, the shortcut panel is displayed upon exiting the editing mode.

Specifically in the embodiment, for the editing panel and the shortcut panel are partially overlapped, when the button icons in the editing panel are edited, the shortcut panel can be hidden, the color of the shortcut panel can be faded, or the display of the shortcut panel can be blurred. When the users exit the editing mode, for example, if there is a button to exit the editing mode, the users click the button to exit the editing mode, the shortcut panel is displayed again after exiting the editing mode.

At least one of the following steps is included after step A20.

In step A21, a function button icon or an application button icon in the editing panel is edited when an editing operation instruction of editing the function button icon or the application button icon is received.

In step A22, a corresponding function is executed when a selection operation instruction of selecting a function button icon or an application button icon of the shortcut panel is received.

Specifically in this embodiment, different responses are given according to different instructions. When an editing operation instruction of editing a function button icon or an application button icon of the edit panel is received, the function button icon or the application button icon is edited. When a selection operation instruction of selecting a function button icon or an application button icon of the shortcut panel is received, the function corresponding to the selected function button icon or the selected application button icon is executed.

Specifically in the embodiment, if the received instruction is an editing operation instruction of adding or deleting a function button icon or an application button icon, the function button icon or the application button icon is edited according to the corresponding editing operation instruction, so that the function button icon or the application button icon is added or deleted. If a selection operation instruction of selecting a function button icon or an application button icon of the shortcut panel is received, a response is made according to a specific selection operation instruction, such as opening the system application "Settings".

Because the editing panel and the shortcut panel are partially overlapped, the user can either edit the editing panel or perform a selection operation on the shortcut panel to generate a selection operation instruction, thus to finish a corresponding function or start a corresponding program.

In this embodiment, because the editing panel and the shortcut panel are partially overlapped when being displayed, the editing panel and the shortcut panel can be switched to display either one. At the same time, the user can edit the button icons in the editing panel, as well as select a function button icon or an application button icon to finish or start a corresponding function.

Furthermore, a fourth embodiment of an interacting method for sidebar menu is provided based on the second embodiment of the present disclosure. In the fourth embodiment, the shortcut panel and the editing panel are overlapped . The interacting method includes at least one of the following steps.

In step A50, the shortcut panel is displayed when a first operation instruction is received and the editing mode exits.

Specifically in the embodiment, after the shortcut panel exits out of the editing mode, the shortcut panel is displayed upon receiving the first operation instruction. Specifically, because the editing panel still fully overlaps the shortcut panel after exiting the editing mode, the first operation instruction from the users is required. The first operation instruction may be produced from a double-clicking operation to the screen, a sliding operation from the edge of the screen toward the center of the screen, or the like. If the first operation instruction is received, the editing panel is hidden and the shortcut panel is re-displayed. In this embodiment, the operations to edit the function button icons and application button icons in the editing panel are similar to the third embodiment in which the editing panel partially overlaps the shortcut panel.

In this embodiment, the editing panel is fully overlapped on the shortcut panel. After exiting out of the editing mode, the shortcut panel is not directly displayed. When the first operation instruction is received, the shortcut panel is displayed again, thus to prevent the users from exiting the editing mode by mistake. If the shortcut panel is displayed too fast, the users need to call out the editing panel again, which is too cumbersome.

Referring to FIG. 14, a fifth embodiment of an interacting method for sidebar menu is provided based on the second embodiment of the present disclosure. In the fifth embodiment, the step A21 includes the following steps.

In step A211, an editing operation instruction of editing a function button icon or an application button icon is received from the users, and a type of the editing operation instruction is determined.

Specifically in the embodiment, after entering the editing mode, an editing operation instruction of editing a function button icon or an application button icon may be received and a type of the editing operation instruction is determined. Commonly used editing operation instructions are divided into deleting operation instructions and adding operation instructions.

In step A212, when the editing operation instruction received is a deleting operation instruction, the corresponding function button icon or the corresponding application button icon is deleted from the shortcut panel.

Specifically in the embodiment, if the editing operation instruction received is a deleting operation instruction, the corresponding function button icon or the corresponding application button icon is deleted from the editing panel, and meanwhile the corresponding function button icon or the corresponding application button icon is deleted from the shortcut panel.

In step A213, when the editing operation instruction received is an adding operation instruction, the corresponding function button icon or the corresponding application button icon is displayed on the shortcut panel.

Specifically in the embodiment, if the editing operation instruction received is an adding operation instruction, a selected button icon in addable button icons is added to the shortcut panel and displayed.

Referring back to FIG. 11 and FIG. 12, a function button icon or an application button icon may be deleted from or added to the shortcut panel. In this embodiment, editing operations to function button icons and application button icons are executed according to the types of received editing operation instructions, which provide more convenient for the users to edit function button icons and application button icons.

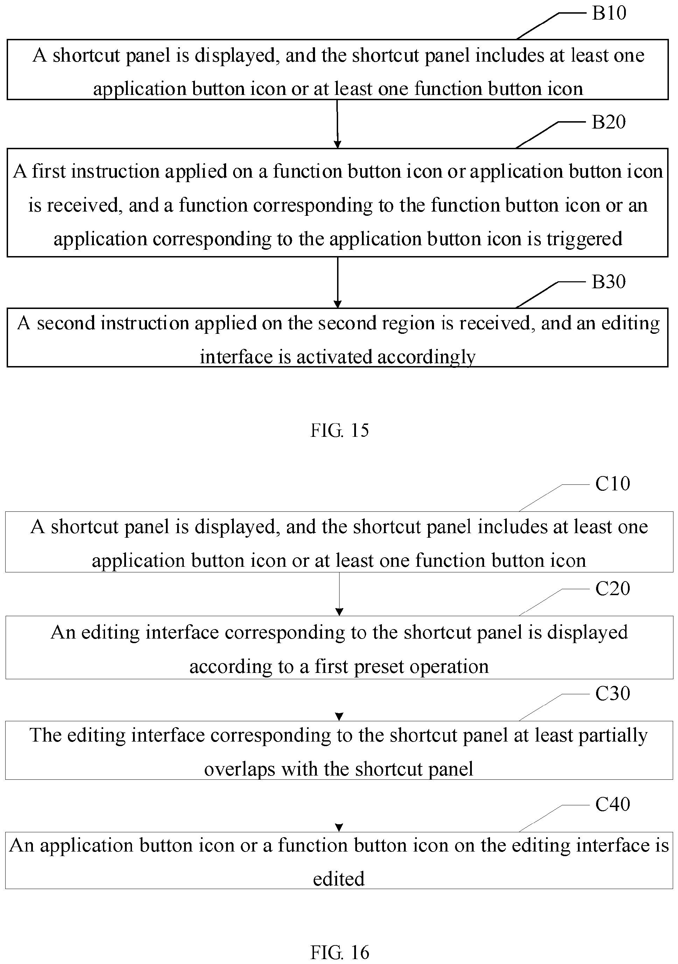

Referring to FIG. 15, in a sixth embodiment of the present disclosure, an interacting method for sidebar menu is applied to a mobile terminal. The mobile terminal can be, but is not limited to, a PAD (Portable Android Device) or a mobile phone. For the convenience of describing, each step of the interacting method is described without an executive subject which carries out the step. The interacting method includes the following steps

In step B10, a shortcut panel is displayed. The shortcut panel includes at least a third region and a fourth region. The third region displays at least one function button icon or at least one application button icon. The fourth region is an entrance to an editing interface.

Specifically in the embodiment, the shortcut panel is displayed on an interface of the mobile terminal. The shortcut panel includes different regions. The regions of the shortcut panel include at least two regions: a third region and a fourth region. The third region is configured to display function button icons and application button icons. The fourth region is an entrance to the editing interface.

In step B20, a first instruction applied on a function button icon or application button icon is received, and in response to the first instruction, a function corresponding to the function button icon or an application corresponding to the application button icon is triggered.

Specifically in the embodiment, after the users operate a function button icon or an application button icon in the third region through the first instruction, the application function corresponding to the function button icon or the application corresponding to the application button icon is activated in responding to a content of the first instruction. The first instruction may be an instruction such as turning on a camera, pausing music playing, or starting a recording function. Corresponding operations of the mobile terminal are carried out according to related content of the first instruction.

In step B30, a second instruction applied on the fourth region is received, and the editing interface is activated accordingly.

Specifically in the embodiment, when the second instruction applied on the fourth region is received, it means that the users need to enter the editing interface to edit the shortcut panel, and the editing interface is activated accordingly. The second instruction may be a voice instruction, a touch instruction, or the like. In the editing interface, function button icons and application button icons can be added to or deleted from the third region. In the editing interface, an editing panel can be displayed occupying the full interface or overlapped on the shortcut panel.

Furthermore, step B40 may be carried out after step B30.

In step B40, the shortcut panel is hidden.

Specifically in the embodiment, after the user invokes the editing interface through the second instruction applied on the fourth region, the shortcut panel is hidden. If the users need to use the shortcut panel again, the shortcut panel can be displayed according to preset operations. The preset operations include closing the editing interface and save the modifications.

In this embodiment, the shortcut panel is displayed and includes at least a third region and a fourth region. The third region displays at least one function button icon or at least one application button icon, and the fourth region is for entering an editing interface. Upon receiving a first instruction applied on a function button icon or an application button icon, a function corresponding to the function button icon or an application corresponding to the application button icon is activated in response to the first instruction. Upon receiving a second instruction applied on the fourth area, the editing interface is opened. The shortcut panel in this embodiment is divided into several different regions, and each region displays different content. The user selects contents in different region to carry out corresponding operations. For different contents are displayed in different region, and the shortcut panel is hidden after opening the editing interface, the users can quickly finds a desired function or application, and at the same time, can quickly select the desired application function or application, which can facilitate the users to operate the editing interface.

Furthermore, a seventh embodiment of an interacting method for sidebar menu is provided based on the sixth embodiment of the present disclosure. In the seventh embodiment, the shortcut panel further includes a fifth region for displaying at least one function button icon or at least one application button icon.

Attributes of the function button icons and application button icons displayed in the third region and the fifth region are the same or different.

Specifically in the embodiment, both the third region and the fifth region can be configured for displaying the function button icons and application button icons. What's displayed in the third region and the fifth region can be the same or be different. Whether the displayed contents in the two regions are the same or not depending on attributes of the function button icons and the application button icons in the two regions. The attributes of the function button icons and the application button icons in the two regions can be the same or different.

Specifically in this embodiment, the attributes of a function button icon or an application button icon may include one of the following: application type, frequency of use, time period, user identity, and user setting. For example, for the application type attributes of function button icons and application button icons, the third region can be configured to display function button icons and application button icons corresponding to third-party applications, and the fifth region can be configured to display function button icons and application button icons corresponding to system applications. However, when there are a large number of button icons of third-party applications to be displayed in the shortcut panel, the third region and the fifth region may be both used to display the button icons of the third-party applications. In this situation, the attributes of the function button icons and application button icons displayed in the two regions are the same. In the embodiment, the attributes of the function button icons and application button icons in the two regions may be different. For example, for the frequency of use attributes of function button icons and application button icons, the third region can be used to display the frequently used function button icon or application button icons, and the fifth region can be used to display the function button icon or application button icons applicable to the users in the current time period.

Furthermore, the interacting method further includes step B50.

In step B50, when a selection operation instruction applied on the third region or the fifth region is received, the remaining regions are hidden, in this embodiment, the remaining regions include the fourth region.

Specifically in the embodiment, in order to facilitate the user to more conveniently select a desired function button icon or application button icon in the third or fifth region, when a selection operation instruction for the third or fifth region is received, the remaining regions including the fourth region is hidden and only the third or fifth region is shown, thus to allow the user to focus on the third or fifth region where the users currently operates.

In this embodiment, the shortcut panel is divided into three regions, and the third and the fifth regions are used to display the function button icons and the application button icons. The attributes of the displayed button icons are the same or different. The remaining regions are hidden when the users operate the third or fifth region, thus to facilitate the operations of the users.

An eighth embodiment of an interacting method for sidebar menu is provided based on the sixth embodiment of the present disclosure. In the eighth embodiment, the interacting method includes the following steps.

In step B60, currently displayed information of the shortcut panel is obtained.

In step B70, an editing button is displayed on the shortcut panel if the display information includes preset information.

Specifically in the embodiment, the currently displayed information of the current shortcut panel is obtained and the editing button is displayed on the shortcut panel when the currently displayed information includes preset information.

Specifically in the embodiment, the currently displayed information of the current shortcut panel includes at least one of a tiled manner and a stacked manner. If the shortcut panel is in the tiled manner, the editing button is displayed in the shortcut panel. The users can click the edit button to enter the editing mode. If the shortcut panel is in the stacked mode, the last one of the function button icons and the application button icons on the shortcut panel is taken as the preset information. When the currently displayed information in the shortcut panel includes preset information, that is, when the shortcut panel is in the stacked mode, the editing button is displayed only when the user swipes to the last one of the function button icons and application button icons of the shortcut panel. For example, if the shortcut panel is stacked in the form of cards, the editing button is displayed on the shortcut panel when the users swipe to the end of the cards.

Furthermore, the interacting method includes steps B80 or B90 carried out after step B70.

In step B80, a click operation instruction on the editing button is received, and an editing interface is displayed in the shortcut panel.

In step B90, a click operation instruction on the editing button is received, and an editing interface is displayed at least partially on the shortcut panel.

Specifically in the embodiment, after receiving the click operation instruction of the user clicking the editing button, the editing interface corresponding to the shortcut panel is opened. The editing interface can be displayed in the same area of the shortcut panel, or the editing interface can be partially or fully overlapped on the shortcut panel, for example, the editing interface is displayed in full screen and overlaps the original shortcut panel, or the editing interface partially covers the shortcut panel.

In this embodiment, the users can click the editing button to open the editing interface. The editing interface can be displayed in the shortcut panel, or at least partially overlapping the shortcut panel.

Furthermore, referring to FIG. 16, an interacting method for sidebar menu in a ninth embodiment of the present disclosure is applied to a mobile terminal. The mobile terminal can be, but is not limited to, a PAD (Portable Android Device) or a mobile phone. For the convenience of describing, each step of the interacting method is described without an executive subject which carries out the step. The interacting method includes the following steps.

In step C10, a shortcut panel is displayed, and the shortcut panel includes at least one application button icon or at least one function button icon.

Specifically in the embodiment, the shortcut panel is displayed on the mobile terminal. The shortcut panel is an interface on the mobile terminal that displays functions possessed by the mobile terminal. The application button icons or the function button icons on the shortcut panel is used to quickly open corresponding applications or functions of the mobile terminal.

In step C20, an editing interface corresponding to the shortcut panel is displayed according to a first preset operation.

Specifically in the embodiment, after the shortcut panel is displayed and the first preset operation is received, the editing interface corresponding to the shortcut panel is displayed. The editing interface is an interface in which the display contents of the shortcut panel can be edited. The preset operation may be but not be limited to: clicking a preset button, sliding a preset progress bar, or zooming in or out the shortcut panel. The editing interface includes at least a first region and a second region. The first region is configured to display shortcut button icons to be deleted (hereinafter referred to as "to-be-deleted button icons"). The second region is configured to display shortcut button icons to be added (hereinafter referred to as "to-be-deleted button icons"). The to-be-deleted button icons include application button icons and function button icons in the shortcut panel. The to-be-added button icons include application button icons and function button icons. The to-be-deleted button icons correspond to the application button icons and function button icons displayed in the current shortcut panel, and the to-be-added button icons are application button icons and function button icons to be added from the second region to the first region.

In step C30, the editing interface corresponding to the shortcut panel at least partially overlaps with the shortcut panel.

Specifically in the embodiment, the editing interface at least partially overlaps with the shortcut panel, which means that both the editing interface and the shortcut panel are displayed, or only the editing interface is displayed.

Furthermore, when the editing interface is operated by the users, the shortcut panel may be hidden, reduced in size, adjusted in position or may keep unchanged.

Specifically in the embodiment, the shortcut panel can be hidden, reduced in size, or adjusted in position. In an alternative embodiment, the shortcut panel can be maintained in its original position with its original shape. A state of the shortcut panel during operating the editing interface can be predetermined according to actual needs.

In Step C40, an application button icon or a function button icon on the editing interface is edited. Specifically in the embodiment, after the editing interface is displayed, one or more application button icons or one or more function button icons can be edited in the editing interface. The editing can be adding one or more application button icons or one or more function button icons to the shortcut panel, deleting one or more application button icons or one or more function button icons from the shortcut panel, or adjusting positions of one or more application button icons or one or more function button icons on the shortcut panel.

In this embodiment, the shortcut panel is firstly displayed, and then the editing interface corresponding to the shortcut panel is displayed according to the first preset operation. For the editing interface at least partially overlaps the shortcut panel, and is configured for editing of application button icons and function button icons in the shortcut panel, the users can edit various application button icons and function button icons of the shortcut panel in the editing interface, without needing to switch to different interfaces of the mobile terminal separately. Thus, the interacting method of the ninth embodiment not only increases the convenience of content editing of the shortcut panel, but also improves the efficiency of the content editing of the shortcut panel. The interacting method also saves the users' time and improves the users' experience of editing button icons in the shortcut panel.

Further, a tenth embodiment of an interacting method for sidebar menu is provided based on the ninth embodiment of the present disclosure. In the tenth embodiment, step C20 includes the following steps.

In step C21, a second preset operation or a third preset operation is received.

In step C22, the editing interface corresponding to the shortcut panel is displayed based on the second preset operation or the third preset operation.

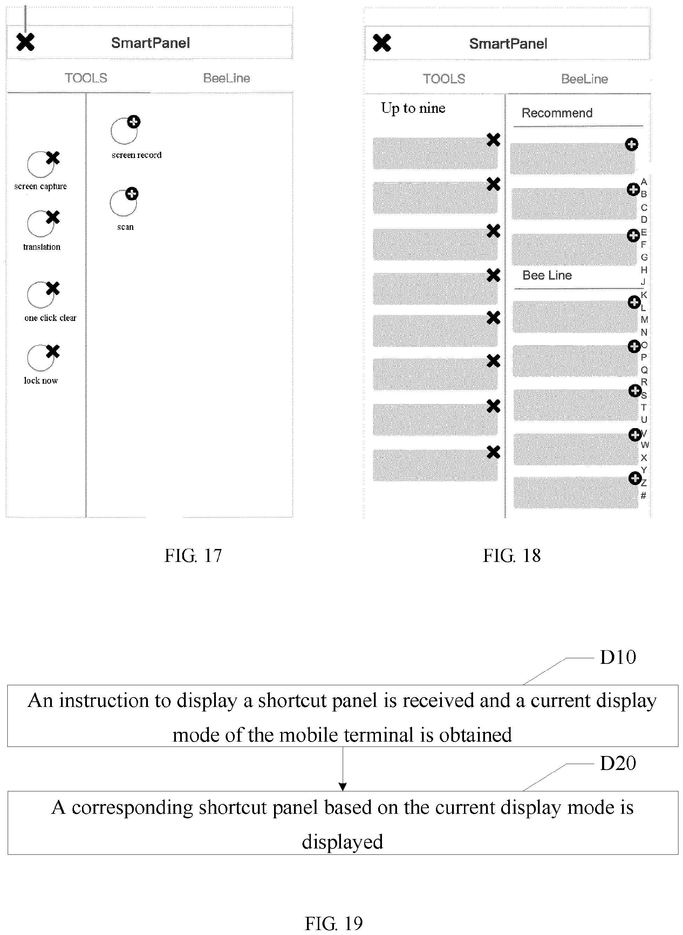

Specifically in this embodiment, the editing interface corresponding to the shortcut panel is displayed according to the second preset operation or the third preset operation. The editing interface includes at least the first region and the second region. Referring to FIG. 17, in an embodiment, the first region shows circles each with an "X" mark and is configured to display the to-be-deleted button icons, and the second region shows circles each with a "+" mark and is configured to display the to-be-added button icons. Referring to FIG. 18, in an alternative embodiment, the first region shows boxes each with an" X "" mark and is configured for displaying the to-be-deleted shortcut button icons, and the second region shows boxes each with a " + " mark and is configured for displaying the to-be-added shortcut button icons.

Specifically in this embodiment, after the second preset operation or the third preset operation is received, the editing interface corresponding to the shortcut panel is displayed according to the second preset operation or the third preset operation. The second preset operation is to enter the editing interface through the shortcut panel of the mobile terminal. The third preset operation is to enter the editing interface through a setting page of the mobile terminal. In the editing interface the users can indirectly edit the application button icons and function button icons of the shortcut button icons, without needing to switch to unused interface regions of the mobile terminal. Thus the interacting method of the tenth embodiment not only increases the convenience of shortcut panel editing, but also improves the efficiency of shortcut panel editing. The interacting method also saves the users' time, and improves the users' experience of editing the button icons in the shortcut panel..

Furthermore, an eleventh embodiment of an interacting method for sidebar menu is provided based on the ninth embodiment of the present disclosure. In the eleventh embodiment, the step C40 includes at least one of the following steps.

In step C41, when an adding instruction of adding an application button icon or a function button icon is detected, a corresponding to-be-added shortcut button icon is added to the first region.

In step C42, when an adjusting instruction of adjusting a displaying position of an application button icon or a function button icon is detected, the displaying position of a corresponding shortcut button icon to be adjusted is adjusted. The shortcut button icons to be adjusted are button icons in the first region.

In step C43, when a deleting instruction of deleting an application button icon or a function button icon is detected, a corresponding to-be-deleted shortcut button icon in the first region is deleted from the first region.

Specifically in the embodiment, editing an application button icon or a function button icon in the editing interface includes at least one of the following steps: adding a corresponding shortcut button icon to the first region when an instruction of adding an application button icon or a function button icon is detected, adjusting a displaying position of a corresponding shortcut button icon in the first region when an adjusting instruction of adjusting a displaying position of an application button icon or a function button icon is detected, and deleting a corresponding shortcut icon from the first region when a deleting instruction of deleting an application button icon or a function button icon is detected.

It should be noted that an order of the steps C41 to C43 is not limited to the above. An order of the steps C41 to C43 is determined based on a sequence of the instructions detected. For example, a deleting instruction of deleting an application button icon or a function button icon is detected firstly and an adding instruction of adding an application button icon or a function button icon is detected secondly, a correspondingly to-be-deleted shortcut button icon in the first region is deleted from the first region firstly, and a correspondingly to-be-added shortcut button icon in the second region is moved to the first region secondly.

Referring to FIG. 17 or FIG. 18, the adding instruction of adding an application button icon or a function button icon includes at least one of the following: a first sliding instruction of sliding a to-be-added shortcut button icon, a first adding instruction of triggering an adding mark of a to-be-added shortcut button icon, and a second addition instruction of triggering an adding mark of a to-be-added shortcut button icon.

The first sliding instruction of sliding a to-be-added shortcut button icon is that: one sliding of the to-be-added shortcut button icon to finish the adding of a corresponding application button icon or a corresponding function button icon. For example, the users can press and hold a to-be-added shortcut button icon and move the to-be-added shortcut button icon from the second region to the first region. This adding way is convenient and quick to add shortcut button icons for the users, and it is also effective and helpful for saving the users' time. The first adding instruction of triggering the adding mark on a to-be-added shortcut button icon is that: triggering the adding mark such as a "+" mark on the to-be-added shortcut button icon to add a correspondingly application button icon or a corresponding function button icon. The second adding instruction of triggering the adding mark on a to-be-added shortcut button icon is that: firstly triggering such as a "selected circle" mark beside the to-be-added shortcut button, and then triggering the adding mark. Double selections and triggerings allow the users to have sufficient time to confirm whether to add the application button icon or the function button icon, and can effectively prevent the users from adding the application button icon or the function button icon by mistake. The adding instruction of adding an application button icon or a function button icon can be flexibly set in various embodiments, and there is no restriction given here.

In addition, the deleting instruction of deleting an application button icon or a function button icon from the first region includes at least one of the following: a second sliding instruction of sliding a to-be-deleted shortcut button icon, a first deleting instruction of triggering a deleting mark of a to-be-deleted shortcut button icon, and a second deleting instruction of triggering an deleting mark of a to-be-deleted shortcut button icon.

The second sliding instruction of sliding a to-be-deleted shortcut button icon is that: one sliding of the to-be-deleted shortcut button icon to finish the deletion of a corresponding application button icon or a corresponding function button icon. For example, the users can drag a to-be-deleted shortcut button icon from the first region to the second region, or to a certain region such as the "Recycle Bin". This deleting way is convenient and quick to delete shortcut button icons for the users, and it is also effective and helpful for saving the users' time. The first deleting instruction of triggering the deleting mark on a to-be-deleted shortcut button icon is that: triggering the deleting mark such as an "X" mark on the to-be-added shortcut button icon to delete a correspondingly application button icon or a corresponding function button icon. The second deleting instruction of triggering the deleting mark on a to-be-deleted shortcut button icon is that: firstly triggering such as a "selected circle" mark beside the to-be-deleted shortcut button, and then triggering the deleting mark. Double selections and triggerings allow the users have sufficient time to confirm whether to delete the application button icon or the function button icon, and can effectively prevent the users from deleting the application button icon or the function button icon by mistake. The deleting instruction of deleting an application button icon or a function button icon can be flexibly set in various embodiments, and there is no restriction given here.

Furthermore, in the embodiment the interacting method includes step C44 after step C41.

In step C44, the to-be-added shortcut button is displayed in the second region, or in an alternative embodiment, not displayed in the second region.

Specifically, referring to FIG. 17 or FIG. 18, after a to-be-added shortcut button icon is added from the second region to the first region, the shortcut button icon to be added may be displayed in the second region, or may not be displayed in the second region. In the embodiment, the quantity of application button icons and function button icons that can be displayed in the first region can be predetermined, that is, the first region only displays a predetermined number of the application button icons and function button icons. If the quantity of the application button icon and function button icons added to the first region exceeds the predetermined number, the redundant application button icon and function button icons can not be added to the first region. For example, as shown in FIG. 17, the number of application button icon and function button icons that can be displayed in the first region is four, and as shown in FIG. 18, the number of the application button icon and the function button icons that can be displayed in the first region is nine. In an alternative embodiment, the quantity of the shortcut button icons in the first region is not be limited.

Furthermore, in the embodiment, the interacting method includes step C45 after step C43.

In step C45, the to-be-deleted shortcut button icon to be deleted is not displayed in the seventh area, or in an alternative embodiment, the to-be-deleted shortcut button icon to be deleted is displayed in an unusable region of the second region.

Specifically in the embodiment, after a to-be-deleted shortcut button icon is deleted from the first region, the deleted shortcut button icon is displayed or not displayed in the second region. For example, after the deletion, the deleted shortcut button can be displayed in an unusable region of the second region, to facilitate the users to check which application button icons and function button icons are deleted.

In this embodiment, after entering the editing interface corresponding to the shortcut panel, the application button icons and function button icons can be edited in the editing interface, such as adding one or more of the application button icons and function button icons, adjusting displaying positions of one or more of the application button icons and function button icons, deleting one or more of the application button icons and function button icons, and etc., so that the users can indirectly add one or more of the application button icons and function button icons, delete one or more of the application button icons and function buttons icons, or adjust displaying positions of one or more of the application button icons and function button icons in the shortcut panel.

Furthermore, a twelfth embodiment of an interacting method for sidebar menu is provided based on the eleventh embodiment of the present disclosure. In the twelfth embodiment, the step C42 includes the following steps.

In step C421, when a dragging instruction of dragging a to-be-adjusted shortcut button icon on the first region is detected, a stop position of the to-be-adjusted shortcut button icon is obtained where a dragging operation is stopped.

In step C422, a displaying position of the to-be-adjusted shortcut button icon is adjusted based on the stop position.

Specifically in the embodiment, the dragging instruction of dragging the to-be-adjusted shortcut button icon on the sixth area is detected and the displaying position of the to-be-adjusted shortcut button icon is adjusted according to the stop position of the dragging operation.

Specifically in the embodiment, for example, application button icons or function button icons A, B, C, and D in the editing interface are listed from top to bottom. A panel editing program detects a dragging instruction of dragging the application button icon or function button icon D on the sixth area, and obtains a final position of the application button icon or function button icon D between the application button icons or application button icons A and B when the dragging is stopped. The panel editing program adjusts the displaying position of the application button icon or function button icon D based on the final position. As a result, the application button icons or function button icons A, D, B, C are listed in the editing interface from top to bottom.

In this embodiment, the displaying positions of the shortcut button icons are adjusted by obtaining the final positions of the shortcut button icons after being dragged in the first region, thus the users can indirectly adjust the displaying positions of the application button icons and function button icons in the shortcut panel.

Furthermore, a thirteenth embodiment of an interacting method for sidebar menu is provided based on the ninth embodiment of the present disclosure. In the thirteenth embodiment, the interacting method includes the following steps after step C40.

In step C50, a fourth preset operation is obtained.

In step C60, the editing interface corresponding to the shortcut panel is hidden and the shortcut panel is displayed based on the fourth preset operation.

Specifically in the embodiment, after the application and the function button icons are edited in the editing interface, the users may want to save editing results. When the fourth preset operation triggered by the user is received, the editing interface is hidden and the shortcut panel is displayed. In an embodiment, the fourth preset operation also triggers to save the editing results. In an alternative embodiment a save button can be clicked to save the editing results. Based on the fourth preset operation, the editing interface is hidden to exit from editing, or the shortcut panel is displayed to exit from editing. The ways to exit from editing can be flexibly set during various embodiments, and there is no restriction given here.

In this embodiment, after the fourth preset operation is obtained, the editing results are saved, then the editing interface is hidden, and the shortcut panel is displayed for the convenience of the users to use the shortcut panel after indirect editing contents of the shortcut panel.

The interacting methods for sidebar menu described in the above embodiments generally display a first shortcut panel on a display of a mobile terminal upon receiving a triggering instruction, and display a second shortcut panel corresponding to the first shortcut panel upon receiving a second triggering instruction. the first shortcut panel is configured to display first shortcut button icons, and the second shortcut panel is configured to display second shortcut button icons. The second shortcut button icons are associated with the first shortcut button icons. The second shortcut panel is configured as an tool to edit the first shortcut button icons of the first shortcut panel. The second shortcut panel can be the second shortcut panel described in some of the described embodiments, be the editing panel in other some of the described embodiments, be the editing interface in remaining of the described embodiments, or be any other form which can be used to edit the first shortcut button icons. All in all, the second shortcut panel is not be limited to any particular shape, size or patter, only that the second shortcut panel can be used to edit the first shortcut button icons of the first shortcut panel, so that the first shortcut button icons on the first shortcut panel changes in at least one of a number, and locations.

Referring to FIG. 19, in a fourteenth embodiment of the present disclosure, an interacting method for sidebar menu is applied to a mobile terminal. The mobile terminal cam be, but is not limited to, a PAD (Portable Android Device) or a mobile phone. For the convenience of describing, each step of the interacting method is described without an executive subject which carries out the step. The interacting method includes the following steps.

In step D10, an instruction of displaying a shortcut panel is received and a current display mode of the mobile terminal is obtained. The shortcut panel in this embodiment is a regular pattern.

Specifically in the embodiment, the current display mode may be one of scene modes of the mobile terminal, such as a reading mode, a camera mode, a video mode, or a phone mode, or be a mode of displaying application interfaces.

Furthermore, receiving the instruction of displaying a shortcut panel includes at least one of the following steps.

In step D11, a voice instruction or a gesture instruction is detected. If the voice instruction or the gesture instruction is one of a plurality of preset instructions to display a shortcut panel, the voice instruction or the gesture instruction is recognized as an instruction of displaying a shortcut panel.

Specifically in the embodiment, voice instructions or gesture instructions are monitored in real time. If a monitored voice instruction or gesture instruction is one of the preset instructions to display a shortcut panel, the voice instruction or gesture instruction is recognized as the instruction of displaying the shortcut panel. When the voice instructions are monitored, the voice content corresponding to the preset instructions to display a shortcut panel may include "shortcut panel", "open shortcut panel", "display shortcut panel", and etc.. When gesture instructions are monitored, the gesture instructions are obtained by a camera or a gesture sensor of an electronic device. The gesture instructions to display a shortcut panel may be two consecutive nods, three-finger sliding on the screen, long-pressing, or the like. When a voice instruction or a gesture instruction is detected, the voice instruction or the gesture instruction is compared with the preset instructions to display a shortcut panel. If the voice instruction or gesture instruction is one of the preset instructions, the voice instruction or the gesture instruction is considered as the instruction of displaying a shortcut panel.

Alternatively, the instruction of displaying a shortcut panel includes step D12.

In step D12, a touch instruction is received by a preset shortcut panel display button icon. If the touch instruction is one of the preset instructions to display a shortcut panel, the touch instruction is recognized as the instruction of displaying a shortcut panel.

Specifically in the embodiment, the touch instruction received by the preset shortcut panel display button icon is compared with the preset instructions to display a shortcut panel. If the touch instruction is one of the preset instructions, the touch instruction is recognized as the instruction of displaying a shortcut panel. Specifically in the embodiment, the preset shortcut panel display button icon is predefined in advance and can be hovered anywhere on the screen of the mobile terminal. A shape of the preset shortcut panel display button icon displayed on the shortcut panel can be a circle, a triangle, a box, or the like. A color of the preset shortcut panel display button icon can be arbitrarily defined. A display property of the shortcut panel display button icon can be "shown" or "hidden". Generally, the display property can be defined in a setting interface of a user center of the mobile terminal. If the display property is set to be "shown" by the users in the setting interface, the shortcut panel display button icon is displayed on the screen. If the display property is set to be "hidden" by the users in the setting interface, the shortcut panel display button icon is not displayed on the screen. In the embodiment, the preset instructions to display a shortcut panel include a click, a long-press, or a slide.

In step D20, a corresponding shortcut panel based on the current display mode is displayed.

Specifically in the embodiment, the corresponding shortcut panel is displayed according to the current display mode. The shortcut panel is composed of a plurality of polygonal button icons. At least two of the multiple polygonal button icons are symmetrical. For example, if the shortcut panel is a regular pattern composed of three polygonal button icons, at least two polygonal button icons of them are symmetrically to each other. When only one of the two symmetrical polygonal button icons is displayed, the contents of the two symmetrical polygonal button icons are the same or related to each other. The contents include applications or functions. For example, in a case one of the two symmetrical polygonal button icons is an "Alipay" application, and the other one of the two symmetrical polygonal button icons can be an application function corresponding to the "Alipay" application, such as the "QR code payment" function.

The polygonal button icons may be boxes, triangles, regular hexagons, or the like. Different arrangements and combinations of the polygonal button icons form different shapes of the shortcut panels. For example, the polygonal button icons are regular hexagons. The length of each side of the regular hexagons may be adaptively adjusted according to a size of the screen. Accordingly, in a case three regular hexagons constituting the shortcut panel can be arranged in a line. In another case six regular hexagons constituting the shortcut panel can be arranged by five surrounding a central one of the regular hexagons, and the six regular hexagons can also be arranged in two rows and three columns.

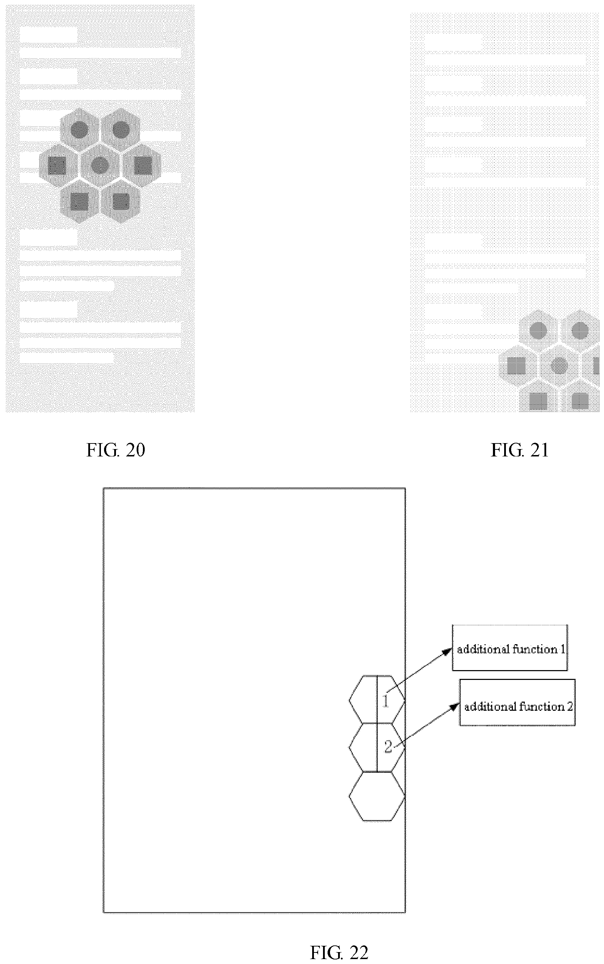

In addition, the displaying information of the shortcut panel includes at least one of the followings: a displaying position of the shortcut panel, the quantity of the polygonal button icons, displaying information of each of the polygonal button icons, and an arrangement order of the polygonal button icons. The displaying position of the shortcut panel can refer to FIG. 20, which shows that the shortcut panel is displayed in the center of the screen. The shortcut panel is composed of seven regular hexagon button icons which are all displayed on the screen. The displaying position of the shortcut panel can refer to FIG. 21, which shows that the shortcut panel is displayed in the lower right corner of the screen. Not all of the polygonal button icons in the shortcut panel are displayed, so as not to block other contents on the screen. The quantity of the polygonal button icons in the shortcut panel can be determined in a corresponding interface. Specifically in the embodiment, the quantity of the polygonal button icons can be predetermined by the users through a preset interface. If the quantity of the polygonal button icons is not predetermined by the users, a default number such as three, six, seven, or the like is determined as the quantity of the polygonal button icons.

The display information of each polygonal button icon can be determined according to usage history of each of the applications and the functions corresponding to each of the polygonal button icons and the current display mode. Generally, the usage history of each application or function can be obtained through the application log. The recently used applications and functions can be obtained according to the usage history of each of the applications and functions. The display information of predetermined quantity of recently used application button icons and function button icons is the display information of the hexagon button icons. The display information of each polygonal button icon is also determined based on the current display mode. The display information is specifically adjusted according to the current display mode. For example, when the current display mode is the video mode, for the video mode occupies the camera and the audio device of the mobile terminal, the display information of certain application button icons or function button icons corresponding to the applications or functions that do not need the camera and the audio device may be used as the display information of the hexagon button icons. For another example, when the current display mode is the phone mode, considering that the notepad may be used when the users makes a call, the button icon corresponding to the notepad can be displayed in the shortcut panel. The application button icons include system application button icons and other application button icons. The function button icons include system function button icons and other function button icons. The other applications are applications other than the system applications and are installed by users.

The polygonal button icons may be application button icons, function button icons or both application button icons and function button icons. The arrangement order of the polygonal button icons can be determined according to a predetermined rule, for example, determining the arrangement order of the polygonal button icons according to historical usage frequencies of the applications and functions. The historical usage frequencies of the applications and functions can reflect the users' preferences. Generally, the polygonal button icon corresponding to the application or function with the highest usage frequency is disposed at the most convenient operation position, such as the top of the shortcut panel. For another example, according to the current display mode, the polygonal button icon corresponding to the application or function that is highly relevant to the current display mode can also be displayed in a more convenient operation. Furthermore, the display content of the polygonal button icon at the center of the shortcut panel may be an auxiliary control function button icon, such as "+" for the users to add more polygonal button icons. It can be understood that the display contents of some of the polygonal button icons in the shortcut panel may be determined according to the current display mode, and display contents of another some of the polygonal button icons in the shortcut panel are fixed and not changed by the current display mode. For example, a setting function button icon or a screenshot shortcut button icon is fixed in the shortcut panel.

Furthermore, when only one of two symmetrical polygonal button icons is displayed, an additional or related function may be displayed in a reserved position of the displayed polygonal button icon, and the additional function corresponds to another one of the symmetrical polygonal button icon that is not displayed. Referring to FIG. 22, the polygonal button icons are hexagon button icons. In the scene shown in FIG. 22, three hexagon button icons are displayed on the right side of the screen. The three hexagon button icons corresponding to three hidden symmetrical polygonal button icons. Therefore, a reserved position can be predetermined in each of the displayed polygonal button icons, such as the reserved position 1 on the right side of one of the hexagon button icons, and the reserved position 2 on the right side of another one of the hexagon button icons in FIG. 22. The reserved position 1 is for displaying additional function 1 and the reserved position 2 is for displaying additional function 2. For example in this case, if the users click the reserved position 1, the additional function 1 is triggered.

Furthermore, when only some of the polygonal button icons are displayed, a rotation operation may be triggered on the displayed polygonal button icons. The displayed polygonal button icons are brought into being hidden and the hidden polygon buttons are brought to being displayed by the rotation operation.

Specifically in the embodiment, when only some of the polygonal button icons are displayed, the rotation operation is triggered on the displayed polygonal button icons. According to a direction of the rotation operation, the displayed polygonal button icons are brought into being hidden, and the hidden polygonal button icons are brought to being displayed.

Furthermore, the rotation operation may rotate only one polygonal button icon, or rotate multiple polygonal button icons. The number of polygonal button icons to be rotated can be determined based on a distance or a pressure of the rotation operation. For example, when the distance or the pressure of the rotation operation is relatively larger, the number of the polygonal button icons that respond to the rotation operation to rotate is larger. When the distance or the pressure of the rotation operation is relatively smaller, the number of the polygonal button icons responding to the rotation operation to rotate is smaller.

Furthermore, the current display mode may be at least one of a reading mode, a photographing mode, a video mode, and a telephone mode. The step D20 includes the following steps.

In step D21, a displaying position of the shortcut panel based on the current display mode is determined.

Specifically in the embodiment, the displaying position of the shortcut panel on the screen of the mobile terminal is determined according to the current display mode. The current display mode may be a reading mode, a photographing mode, a video mode, or a phone mode. It can be understood that the current display mode may further be at least one of a landscape mode, a portrait mode, and a folding screen mode. The current display mode can also be a full-screen mode or a non-full-screen mode. The displaying position of the shortcut panel is determined based on a principle that the main display content on the screen of the mobile terminal is not blocked. For example, if the current display mode is the reading mode, the displaying position of the shortcut panel can be the lower right corner or the lower left corner of the screen. If the current display mode is the video mode, the displaying position of the shortcut panel is where no portrait displayed. If the mobile terminal is in a foldable screen mode with the screen of the mobile terminal being folded to be at least two parts, the displaying position of the shortcut panel may be at the junction of the two parts.

In step D22, the shortcut panel is displayed based on the displaying position.

Specifically in the embodiment, the shortcut panel is displayed according to the displaying position of the shortcut panel determined according to the current display mode of the mobile terminal. Furthermore, a dragging operation instruction for dragging the shortcut panel may be received during the display of the shortcut panel. When the dragging operation instruction is received, a stop position of a dragging operation corresponding to the dragging operation instruction is obtained, and the shortcut panel is moved to the stop position of the dragging operation according to the dragging operation instruction.

Furthermore, a zoom-in or zoom-out operation instruction for zooming the shortcut panel may be received during the display of the shortcut panel, and a size of the shortcut panel may be adjusted according to the zoom-in or zoom-out operation instruction.

In this embodiment, the instruction of displaying a shortcut panel is received and the current display mode of the mobile terminal is obtained, the shortcut pane is displayed according to the current display mode. The shortcut panel is a regular pattern. By displaying the shortcut panel corresponding to the current display mode, the operation convenience and intelligence of operating the shortcut panel is improved.

A fifteenth embodiment of an interacting method for sidebar menu is provided based on the fourteenth embodiment of the present disclosure. In the fifteenth embodiment, the regular pattern of the shortcut panel is a three-dimensional magic cube. The current display mode is to display application interfaces. The step D20 includes the following steps.

In step D23, at least one first target panel in magic cube panels of the three-dimensional magic cube is determined based on the application interfaces displayed, and the at least one first target panel is displayed on the display interface of the mobile terminal.

Specifically in this embodiment, the mobile terminal is powered on. When an application in the mobile terminal is triggered, an application interface corresponding to the application is opened accordingly, that is, the application is activated and the application interface of the application is obtained and displayed in the display interface of the display screen of the mobile terminal.

Specifically in the embodiment, the current display mode is to display an application interface. The displayed application interface determines display contents of the at least one first target panel, and the at least one first target panel is automatically displayed on the display interface. The three-dimensional magic cube is a three-dimensional magic cube model displayed in a sidebar of the mobile terminal. The three-dimensional magic cube model includes a preset number of magic cube panels. That is, the three-dimensional magic cube model is constituted by the preset number of magic cube panels. For example, the three-dimensional magic cube model may be constituted by six magic cube panels, and each of the magic cube panels includes a certain number of sub-panels. For example, a magic cube panel of a second-order three-dimensional cube model may include four sub-panels.

Specifically in the embodiment, if an application is opened and an application interface corresponding to the application is displayed in the display interface. A type of the application interface or an application function of the application interface is identified based on the application interface. One or more of the magic cube panels related to the application interface are determined as the first target panel(s) according to the type of the application interface or the application function. When the application interface is opened, the mobile terminal automatically displays the first target panel(s) in the display interface. That is, when an application interface is opened, the first target panel(s) corresponding to the application interface is(are) automatically opened.

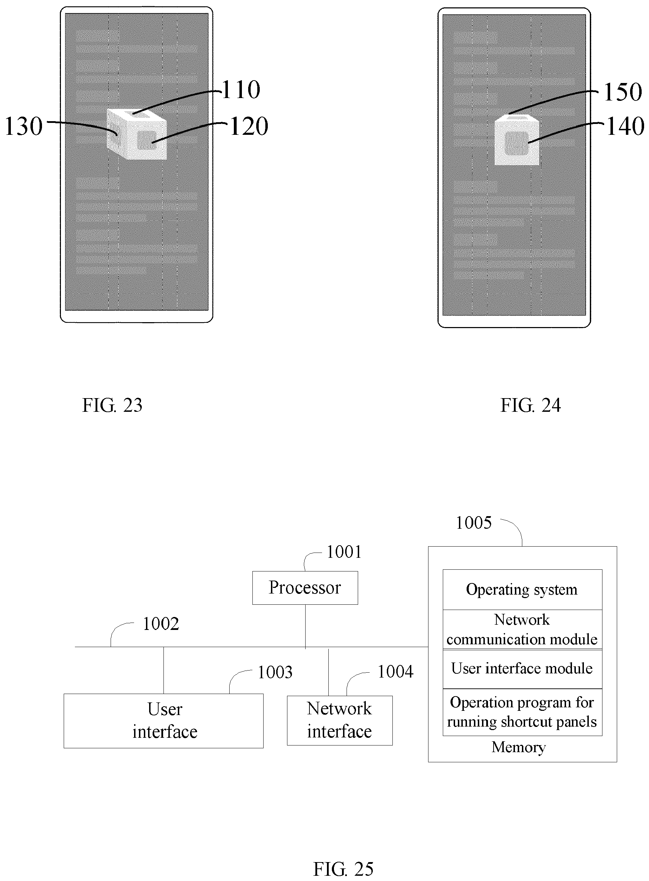

A first target panel is one of the magic cube panels of the three-dimensional magic cube. If there are more than one first target panels corresponding to an application, when an application interface of the application is opened, the first target panels in the three-dimensional magic cube can be displayed. For example, if the system's current magic cube is a cubic cube with six panel, one or two or three face(s) or panels of the cubic cube can be displayed on the current display interface. It can be understood that a display rule for displaying cubic cubes follow the cube displaying rules, that is, up to three faces or panels of a cubic cube can be displayed at the same time. Referring to FIG. 23, the first target panels in the three-dimensional magic cube are displayed. The first target panels include three magic cube panels, namely, the magic cube panels 110, 120, and 130 shown in FIG. 23. Referring to FIG. 24, the first target panels in a three-dimensional magic cube are shown. The first target panels include two magic cube panels, namely, the magic cube panels 140 and 150. The first target panels are automatically displayed on the display interface according to the displaying rule of the three-dimensional magic cube.

In addition, the three-dimensional magic cube may be an nth-order magic cube, a mirrored nth-order magic cube, an nth-order Mastermorphix, an nth-order pyramid, an nth-order and m-panel magic cube, a rainbow ball, or an n-axis and nth-order magic cube. The typical three-dimensional magic cube, such as the nth-order three-dimensional magic cubes, may, but is not limited to to, a second-order three-dimensional magic cube, a third-order three-dimensional magic cube, or a fourth-order three-dimensional magic cube.

The interface displaying method proposed in this embodiment obtains a currently displayed application interface, determines one or more first target panel(s) in the magic cube panels of the three-dimensional magic cube based on the application interface, and automatically displays the first target panel(s) on the display interface. When an application or a function is activated, an application interface corresponding to the application or function is obtained, and at least one magic cube panel in the three-dimensional magic cube is automatically displayed in the current display interface according to the type of the application interface or the application function, so that related applications or functions in the magic cube panel can be opened, thereby a cumbersome operation process of using the shortcut function in the shortcut panel is avoided. The shortcut panel is displayed in the form of a magic cube. Different magic cube panels in the magic cube can be arbitrarily switched, and the variety of the shortcut panels is increased and the user experience is enhanced.

A sixteenth embodiment of an interacting method for sidebar menu is provided based on the fifteenth embodiment of the present disclosure. In the sixteenth embodiment, the step D23 includes the following steps.

In step D231, a first target sub-panel in the magic cube panels of the three-dimensional magic cube based on the application interface.

In step D232, one or more second target sub-panel(s) is(are) determined based on the application interface and the panels adjacent to the first target sub-panel, and the first target sub-panel and the second target sub-panel are displayed on the shortcut panel.

Specifically, in this embodiment, when there are a plurality of first target panels in the magic cube panels of the three-dimensional magic cube, if an application is opened and an application interface corresponding to the application is displayed in the display interface, a type of the application interface or an application function of the application interface is identified based on the application interface, thereby a magic panel of the three-dimensional magic cube related to the application interface is determined as the first target sub-panel according to the application interface type or the application function of the application interface. At the same time, magic cube panels adjacent to the first target sub-panel and related to the application interface are determined as the second target sub-panels according to the type of the application interface or the application function of the application interface. Then, when the application interface is opened, the mobile terminal automatically displays the first target sub-panel and the second target sub-panel(s) in the display interface, that is, the first target sub-panel and the second target sub-panel(s) are automatically opened when a corresponding application interface is opened. Referring to FIG. 23, the first target sub-panel is the magic cube panel 120 (the area of which is the largest), and the second target sub-panels include the magic cube panels 110 and 130. The three-dimensional magic cube can be displayed in a sidebar, or in a floating or translucent way.

In another embodiment, when there are two first target panels in the three-dimensional magic cube, if an application is started and the application interface corresponding to the application is displayed on the display interface, a magic cube panel most relevant to the application interface is considered as the first target sub-panel based on the type of the application or the application function of the application. At the same time, another magic cube panel that is adjacent to the first target sub-panel and most relevant to the application interface is determined as the second target sub-panel based on the type of the application or the application function of the application. Then, when the application interface is opened, the mobile terminal automatically displays the first target sub-panel and the second target sub-panel in the display interface, that is, two magic cube panels of the three-dimensional magic cube are automatically displayed when the application interface is opened.

In still another embodiment, when there are three first target panels in the three-dimensional magic cube, if an application is started and the application interface corresponding to the application is displayed on the display interface, a magic cube panel most relevant to the application interface is considered as the first target sub-panel based on the type of the application or the application function of the application. At the same time, two other magic cube panels that are adjacent to the first target sub-panel and most relevant to the application interface are determined as the second target sub-panels based on the type of the application or the application function of the application. Then, when the application interface is opened, the mobile terminal automatically displays the first target sub-panel and the second target sub-panels in the display interface, that is, three magic cube panels of the three-dimensional magic cube are automatically displayed when the application interface is opened.

Furthermore, the interacting method further includes the following steps after step D23.

In step D24, if a fifth preset operation triggered on the first target panel is detected, an operation instruction corresponding to the fifth preset operation is obtained.

In step D25, a second target panel is obtained and displayed based on the operation instruction.

Specifically in the embodiment, if the fifth preset operation on the first target panel is detected, the operation instruction corresponding to the fifth preset operation is obtained. The second target panel is obtained based on the operation instruction, and is displayed on the display interface of the mobile terminal.

Specifically in this embodiment, the fifth preset operation may be a click operation, a movement operation, a touch operation, a long-press operation, a double-click operation, or a sliding operation. After the application interface and the first target panel are displayed, the user can control the sliding of the three-dimensional magic cube in the area displaying the first target panel to switch to display the other magic cube panels of the three-dimensional magic cube. If it is detected that the fifth preset operation is carried out in the area where the first target panel locates, the operation instruction corresponding to the fifth preset operation is obtained. The operation instruction is configured to control the display of a second target panel to replace the first target panel. The second target panel may be any magic cube panel of the three-dimensional magic cube, thus it can be switched to any magic cube panel other than the first target panel.

In an alternative embodiment, the second target panel(s) may be one or more panels in another three-dimensional magic cube, that is, a magic cube panel of another three-dimensional magic cube can be switched and displayed. If the fifth preset operation on the first target panel is detected, the operation instruction corresponding to the fifth preset operation is obtained. A second target panel of another three-dimensional cube is obtained and displayed based on the operation instruction. After an application is opened and the first target panel automatically is displayed, the user can control the sliding of three-dimensional magic cubes in the area where the first target panel locates through the display screen of the mobile terminal to switch to display another three-dimensional magic cube. If it is detected that the corresponding fifth preset operation is carried out in the area where the first target panel locates, the operation instruction corresponding to the fifth preset operation is obtained, and the operation instruction is configured to control the displaying of a second target panel of another three-dimensional magic cube to replace the first target panel, that is, to display another three-dimensional magic cube. Specifically in this embodiment, sliding left and right can switch to display different magic cube panels of a three-dimensional magic cube, and sliding up and down can switch to display different three-dimensional magic cubes.

In this embodiment, if the fifth preset operation on the first target panel is detected, the operation instruction corresponding to the fifth preset operation is obtained, and a second target panel is obtained and displayed based on the operation instruction. When the first target panel in the three-dimensional magic cube is displayed, the users can operate the mobile terminal to switch between different magic cube panels of a three-dimensional magic cube or between different three-dimensional magic cubes by carrying out different preset operations. Thus the users can make more use of the shortcut panels. The variety of the shortcut panels is increased and the user experience is enhanced.

A seventeenth embodiment of an interacting method for sidebar menu is provided based on the fifteenth embodiment of the present disclosure. In the seventeenth embodiment, the interacting method includes the following steps before step D10.

In step D30, at least one button icon of at least one application or function is disposed on the three-dimensional magic cube based on a sixth preset operation.

Specifically in this embodiment, the sixth preset operation carried out by the users on the display screen of the mobile terminal is detected, and the icon(s) of the application(s) or function(s) corresponding to the sixth preset operation is moved to a magic cube panel of the three-dimensional magic cube. The sixth preset operation may be one of a click operation, a movement operation, a touch operation, a long-press operation, a double-click operation, and a sliding operation.

Further, after step D23, the interacting method further includes the following steps after step D2.

In step D26, an application or a function corresponding to the first target panel is obtained if a seventh preset operation on the first target panel is detected.

In Step D27, the application or application function is activated.

Specifically in the embodiment, if the seventh preset operation on the first target panel is detected, the application or application function corresponding to the first target panel is obtained and started. The seventh preset operation may be one of a click operation, a movement operation, a touch operation, a long-press operation, a double-click operation, and a sliding operation. Specifically, taking the seventh preset operation being a click operation as an example, after the mobile terminal automatically displays the first target panel on the display interface, a click operation carried out by the users on the display screen of the mobile terminal is detected. If the click operation is to click an application button icon or a function button icon on the first target panel, an application or a function corresponding to the application or function button icon is started. It can be understood that a magic cube panel includes a number of magic cube sub-regions. If a three-dimensional magic cube is an nth-order cube, a magic cube panel of the three-dimensional magic cube includes a number of n² magic cube sub-regions. If the three-dimensional magic cube contains only one first target panel, the first target panel contains a number of n² magic cube sub-regions. If there are a number of m first target panels in a three-dimensional magic cube, the first target panels includes a number of m*n² magic cube sub-regions. For example, if a three-dimensional Rubik's cube displayed is a second-order magic cube, a magic cube panel of the second-order magic cube contains four magic cube sub-regions. If there is only one first target panel in the second-order magic cube, the first target panel contains only four magic cube sub-regions, and each of the sub-regions displays an application button icon or a function button icon.

Furthermore, after step D23, the interacting method includes the following steps after step D23.

In step D28, an application or a function corresponding to the second target panel is obtained if an eighth preset operation on the second target sub-panel is detected.

In step D29, the application or the function is activated.

Specifically in the embodiment, if the eighth preset operation on the second target panel is detected, the application or function corresponding to the second target panel is obtained and opened. The eighth preset operation may be one of a click operation, a movement operation, a touch operation, a long-press operation, a double-click operation, and a sliding operation. Specifically, taking the eighth preset operation being a long-press operation as an example, after the mobile terminal automatically displays the first target sub-panel and the second target sub-panel on the display interface, a long-press operation carried out by the users on the display screen of the mobile terminal is detected. If the long-press operation is to long-press an application button icon or a function button icon on the second target sub-panel, an application or a function corresponding to the application button icon or function button icon is activated. It can be understood that a magic cube panel includes a number of magic cube sub-regions. If a three-dimensional magic cube is an nth-order cube, a magic cube panel of the three-dimensional magic cube contains a number of n² magic cube sub-regions. If the three-dimensional magic has only one second target sub-panel. The second target panel includes a number of n² magic cube sub-regions. If the three-dimensional magic includes two second target sub-panels, the second target sub-panels includes a number of 2*n² magic cube sub-regions, and each of the sub-regions displays an application button icon or a function button icon.

In this embodiment, the seventh preset operation carried out by the users on the first target panel, or the eighth preset operation carried out by the users on the second target panel is detected, and an application or a function corresponding to the seventh preset operation or the eight preset operation is activated.

An eighteenth embodiment of an interacting method for sidebar menu is provided based on the fifteenth embodiment of the present disclosure. In the eighteenth embodiment, step D23 further includes the following steps.

In step D233, a degree of association between each of the magic cube panels and the application interface is obtained based on the application interface.

In step D234, the first target panel(s) is(are) determined based on the degrees of association, and automatically displayed on the display interface.

Specifically in the embodiment, if an application is opened and an application interface corresponding to the application is displayed in the display interface, the type of the application interface or the application function of the application interface is identified based on the application interface. Degrees of association between the application interface and the functions and the application of each of the magic cube panels are obtained, so as to select a magic cube panel with the highest degree of correlation to the application interface as the first target panel, and automatically display the first target panel on the display interface of the mobile terminal. The degrees of association between the magic cube panels and the application interface are used to determine a stereoscopic display relationship of the magic cube. Specifically, if there is only one first target panel, a magic cube panel with the highest degree of correlation is obtained as the first target panel. If there are two first target panels, two magic cube panels with the highest correlation degrees are obtained as the first target panels. If there are three first target panels, three magic cube panels with the highest correlation degrees are obtained as the first target panels.

In the embodiment, before the first target panel(s) is(are) automatically displayed, the interacting method further includes the following step.

In step a, a display area (or display areas) of the first target panel(s) is(are) determined based on the first target panel(s) and the stereoscopic display relationship of the three-dimensional magic cube.

The automatically displaying of the first target panel(s) includes the following step.

In step b, the first target panel(s) is(are) automatically displayed on the display area(s).

Specifically in the embodiment, the display sizes of different first target panel are determined based on the number of the first target panels and the stereoscopic display relationship of the three-dimensional magic cube, and the display area(s) of the first target panel(s) is(are) further determined according to the display size(s). After that, the first target panel(s) is(are) automatically displayed in the display area(s). The display area(s) of the first target panel(s) may be at least one of the followings: a sidebar or sidebars, a square display area or square display areas, a hexagonal display area or hexagonal display areas, a polygonal display area or polygonal display areas, and a circular display area or circular display areas.

Specifically in the embodiment, if there is only one first target panel, a square display area for displaying one magic cube panel is determined based on the display size of the magic cube panel. The first target panel is displayed in the square display area. If there are two first target panels, a hexagon display area for displaying two magic cube panels is determined based on the display sizes of the magic aspect panels, and the first target panels are displayed in the hexagon display area. If there are three first target panels, a hexagon display area for displaying three magic cube panels is determined based on the display sizes of the magic cube panels, and the first target panels are displayed in the hexagon display area.

The interface displaying method proposed in this embodiment obtains the degrees of association between each magic cube panel and the application interface, determines one or more first target panel(s) based on the degrees of association, and displays different shortcut panels for the users to use shortcut functions, which increases the variety of the shortcut panels, and improves the user experience.

The present disclosure also provides an apparatus according to an embodiment. The apparatus is applied in a mobile terminal. The apparatus includes a first displaying module and a second displaying module.

The first displaying module is configured to display a first shortcut panel in the mobile terminal when a first triggering instruction is detected.

The second displaying module is configured to display a second shortcut panel corresponding to the first shortcut panel when a second triggering instruction is detected.

In some embodiments, the first shortcut panel is configured to display first shortcut button icons and the second shortcut panel is configured to display second shortcut button icons. The second shortcut button icons include shortcut button icons to be added (hereinafter referred to as "to-be-added shortcut button icons") and shortcut button icons to be deleted (hereinafter referred to as "to-be-deleted shortcut button icons"). The apparatus further includes an adding module and an adjusting module.

The adding module is configured for adding a to-be-added shortcut button icon when an adding instruction of adding a shortcut button icon is detected;

An adjusting module is configured to adjust a displaying position of a to-be-deleted shortcut button icon when an adjusting instruction of adjusting a displaying position of the shortcut button icon is detected. The to-be-deleted shortcut button icons includes shortcut button icons correspond to the first shortcut button icons.

In some embodiments, the second shortcut panel includes at least a first region and a second region, the first region displays the to-be-deleted shortcut button icons, and the second region displays the to-be-added shortcut button icons. The adding module includes an adding unit.

The adding unit is configured to add a to-be-added shortcut button icon from the second region to the first region when an adding instruction of adding a shortcut button icon is detected. The shortcut button icon moved from the second region to the first region is accordingly displayed as a new to-be-deleted shortcut button icon.

In some embodiments, the apparatus further includes a third displaying module.

The third displaying module is configured to display a shortcut button icon corresponding to the to-be-added shortcut button icon moved from the second region to the first region on the first shortcut panel.

In some embodiments, the apparatus further includes a deleting module.

The deleting module is configured to delete a to-be-deleted shortcut button icon in the first region from the first region when the deleting instruction of deleting a shortcut button icon is detected, and display the to-be-deleted shortcut button icon in the second region.

In some embodiments, the adjusting module includes an obtaining unit and an adjusting unit.

The obtaining unit is configured to obtain a stop position of the to-be-deleted shortcut button icon where a dragging is stopped when a dragging instruction of dragging the to-be-deleted shortcut button icon in the first region is detected;

An adjusting unit is configured to adjust a displaying position of the to-be-deleted shortcut button icon in the first region based on the stop position.

In some embodiments, the apparatus further includes a receiving module, a hiding module and a fourth displaying module.

The receiving module is configured to receive a retracting instruction of retracting the second shortcut panel.

The hiding module is configured to hide the second shortcut panel based on the retracting instruction of retracting the second shortcut panel.

The fourth displaying module is configured to display the first shortcut panel.

In some embodiments, shortcut buttons corresponding to the first shortcut button icons include application buttons and function buttons. The application buttons include system application buttons and other application buttons. The function buttons include system application function buttons and other application function buttons. The operating apparatus further includes a first interface entering module and a second interface entering module.

The first interface entering module is configured to enter an application interface corresponding to an application button when a triggering instruction for triggering the application button is detected.

The second interface entering module is configured to enter a function interface corresponding to a function button when a triggering instruction for triggering the function button is detected.

In addition, the present disclosure provides an apparatus according to another embodiment. The apparatus is applied in a mobile terminal. The apparatus includes a first displaying module, a responding module and a second displaying module.

The first displaying module is configured to display a shortcut panel.

The responding module is configured to enter an editing mode when receiving an editing operation instruction of editing the contents of the shortcut panel.

The second displaying module is configured to display an editing panel.

In some embodiments, the apparatus further includes a first editing module, a hiding module and a third displaying module.

The first editing module is configured to edit function button icons and application button icons in the editing panel.

The hiding module is configured to hide the shortcut panel;

A third displaying module is configured to display the shortcut panel when exiting out the editing mode.

In some embodiments, the apparatus further includes a second editing module and an executing module.

The second editing module is configured to edit a function button icon or an application button icon in the editing panel if an editing operation instruction of editing the function button icon or the application button icon of the editing panel is received.

The executing module is configured to execute a corresponding function if a selection operation instruction for selecting a function button icon or an application button icon of the shortcut panel is received.

In some embodiments, the second editing module includes a judging unit, a deleting unit and an adding unit.

The judging unit is configured to receive an editing operation instruction of editing a function button icon or an application button icon, and determine a type of the editing operation instruction.

The deleting unit is configured to delete the function button icon or the application button icon from the shortcut panel when the type of the editing operation instruction is a deleting operation instruction of deleting the function button icon or the application button icon.

The adding unit is configured to add the function button icon or the application button icon on the shortcut panel when the type of the editing operation instruction is an adding operation instruction.

In some embodiments, the apparatus further includes a fourth displaying module.

The fourth displaying module is configured to display the shortcut panel when exiting out the editing mode and receiving a first operation instruction.

The present disclosure also provides an apparatus according to still another embodiment. The apparatus is applied in a mobile terminal. The apparatus includes a first displaying module, a first receiving module, a first responding module, an activating module, a second receiving module and a second responding module. The shortcut panel includes a third region and a fourth region. The third region displays at least one function or application button icon. The fourth region is an entrance to an editing interface.

The first displaying module is configured to display a shortcut panel

The first receiving module is configured to receive a first instruction applied on a function button icon or an application button icon.

The first responding module is configured to respond to the first instruction.

The activating module is configured to activate a function or an application corresponding to the function button icon or the application button icon.

The second receiving module is configured to receive a second instruction applied on the second region.

The second responding module is configured to enter the editing interface.

In some embodiments, the apparatus further includes a first hiding module.

The first hiding module is configured to hide remaining regions when a selection operation instruction for selecting the third region or the fifth region is received. The remaining regions include the fourth region.

In some embodiments, the apparatus further includes a second hiding module.

The second hiding module is configured to hide the shortcut panel.

In some embodiments, the apparatus further includes an obtaining module and a second displaying module.

The obtaining module is configured to obtain display information of the shortcut panel.

The second displaying module is configured to display an editing button on the shortcut panel if the display information of the shortcut panel includes preset information.

In some embodiments, the apparatus further includes a third receiving module and a third displaying module.

The third receiving module is configured to receive a click operation instruction on the editing button.

The third displaying module is configured to display an editing interface in the shortcut panel.

In some embodiments, the apparatus further includes a fourth receiving module and a fourth displaying module.

The fourth receiving module is configured to receive a click operation instruction on the editing button;
The fourth displaying module is configured to display an editing interface at least partially on the shortcut panel.

In some embodiments, an apparatus is also provided according to still another embodiment of the present disclosure, the apparatus is applied in a mobile terminal, and includes a first displaying module, a second displaying module and a editing module.

The first displaying module is configured to display a shortcut panel.

The second displaying module is configured to display an editing interface corresponding to a shortcut panel based on a first preset operation;

The editing module is configured to edit an icon corresponding to an application button icon or a function button icon in the editing interface. The editing interface includes a first region and a second region.

In some embodiments, the editing module includes an adding unit, an adjusting unit and a deleting unit.

The adding unit is configured to add a to-be-added shortcut button icon to the first region when an adding instruction of adding an application button icon or a function button icon is detected.

The adjusting unit is configured to adjust a displaying position of a shortcut button icon when an adjusting instruction of adjusting a displaying position of an application button icon or a function button icon is detected.

The deleting unit is configured to delete a to-be-deleted shortcut button icon from the first region when a deleting instruction of deleting an application button icon or a function button icon is detected.

In some embodiments, the apparatus further includes a first responding module.

The first responding module is configured to display the to-be-added shortcut button icon in the second region.

In some embodiments, the adjustment unit includes an obtaining sub-unit and an adjustment sub-unit..

The obtaining sub-unit is configured to obtain a stop position of the shortcut button icon where a dragging operation is stopped when a dragging instruction of dragging the shortcut button icon on the first region is detected.

The adjustment sub-unit is configured to adjust the displaying position of the shortcut button icon based on the stop position.

In some embodiments, the apparatus further includes a second responding module.

The second responding module is configured to display the icon of the to-be-deleted shortcut button in the second region or in an unusable area of the second region.

In some embodiments, the apparatus further includes an obtaining module, a hiding module and a third displaying module.

The obtaining module is configured to obtain a fourth preset operation.

The hiding module is configured to hide the editing interface based on the fourth preset operation.

The third displaying module is configured to display the shortcut panel.

An apparatus of shortcut panels is also provided according to still another embodiment of the present disclosure. The apparatus is applied in a mobile terminal and includes a receiving module, a first obtaining module and a first displaying.

The receiving module is configured to receive an instruction of displaying a shortcut panel.

The first obtaining module is configured to obtain a current display mode of the mobile terminal.

The first displaying module is configured to display a shortcut panel based on the current display mode. The shortcut panel includes a plurality of polygonal button icons.

In some embodiments, all of the polygonal button icons are displayed or only some of the polygonal button icons are displayed and the remaining parts are hidden.

In some embodiments, the apparatus further includes a second displaying module.

The second displaying module is configured to hiding the displayed polygonal button icons and displaying the hidden polygonal button icons when a rotation operation is triggered on the displayed polygonal button icons when the plurality of polygonal button icons are partially displayed.

In some embodiments, the current display mode includes at least one of a reading mode, a photographing mode, a video mode, and a telephone mode. The first displaying module includes a first determining unit and a first displaying unit:
The first determining unit is configured to determine a displaying position of the shortcut panel based on the current display mode.

The first displaying unit is configured to display the shortcut panel based on the displaying position.

In some embodiments, the current display mode is a mode of displaying an application interface. The first displaying module further includes a second determining unit and a second displaying unit.

The second determining unit is configured to determine at least one first target panel in each of magic cube panels of a three-dimensional magic cube based on the displayed application interface.

The second displaying unit is configured to automatically display the at least one first target panel on a display interface of the mobile terminal.

In some embodiments, the apparatus further includes a setting module, a second obtaining module and an activating module.

The setting module is configured to dispose at button icon corresponding to at least one application or function on the three-dimensional magic cube based on a sixth preset operation.

The second obtaining module is configured to obtain an application or a function corresponding to the first target panel upon a seventh preset operation on the first target panel is detected.

The activating module is configured to activate the application or function.

In some embodiments, the determining unit includes a obtaining sub-unit and a determining sub-unit.

The obtaining sub-unit is configured to obtain degrees of association between the magic cube panels and the application interface based on the application interface.

The determining sub-unit is configured to determine the at least one first target panel based on the degrees of association.

In some embodiments, the display unit further includes a displaying sub-unit.

The displaying sub-unit is configured to automatically display the at least one first target panel on a display interface of the mobile terminal.

An implementing manner of each of the apparatuses given above can make reference to at least one of the embodiments of the interacting method for sidebar menu, and the details of which are omitted herein.

The present disclosure also provides an apparatus. The apparatus may be a mobile terminal, for example, the apparatus can be the mobile terminal given in any one of the above embodiments of interacting method and apparatus. That is, any one of the embodiments of interacting method and apparatus given above may be embedded in the apparatus and executed by the apparatus. Referring to FIG. 25, FIG. 25 is a schematic block diagram of a hardware environment of the apparatus according to an embodiment of the present disclosure.

As shown in FIG. 25, the apparatus may include a processor 1001, such as a CPU, a memory 1005, a user interface 1003, a network interface 1004, and a communication bus 1002. The communication bus 1002 is configured for connection and communication between these components. The user interface 1003 may include a display, an input unit such as a keyboard. The user interface 1003 may further include either one or both of a standard wired interface and a wireless interface. The network interface 1004 may include either one or both of a standard wired interface and a wireless interface (such as a WI-FI interface). The memory 1005 may be a high-speed RAM memory or a non-volatile memory, such as a magnetic disk memory. The memory 1005 may be a storage device independent of the processor 1001.

In some embodiments, the apparatus may further include an RF (Radio Frequency, radio frequency) module, a sensor, an audio module, a WiFi module, or the like.

Those skilled in the art can understand that a hardware structure of the apparatus shown in FIG. 25 does not constitute a limitation on the apparatus of the present disclosure. The apparatus of the present disclosure may include more or fewer components than shown, may combine certain components, or may has a different component arrangement.

As shown in FIG. 25, being computer storage medium, the memory 1005 may include an operating system and operation programs of a network communication module, a user interface module, and shortcut panels. Among them, the operating system is a program that manages and controls the hardware and software resources of the operating device, and supports the running of the operation program for shortcut panels and other software or programs.

In the apparatus shown in FIG. 25, the user interface 1003 is mainly configured to connect to a terminal and perform data communication with the terminal, such as receiving a start test instruction sent by the terminal. The network interface 1004 is mainly configured to connect to a background server and perform data communication with the background server. The processor 1001 may be used to invoke the operation program for shortcut panels stored in the memory 1005 and execute the steps of at least one interacting method for sidebar menu as described above.

An implementing manner of the apparatus of the present disclosure can make reference to at least one of the foregoing embodiments of the interacting method for sidebar menu, and the details of which are omitted herein.

In addition, a computer-readable storage medium is also provided according to an embodiment of the present disclosure. The computer-readable storage medium can be incorporated in the apparatus or connected to the apparatus. The computer-readable storage medium stores an operation program for shortcut panels. The operation program for shortcut panels stored in the computer-readable storage medium can be invoked and executed by the processor of the apparatus to carry out an interacting method for sidebar menu. The interacting method for sidebar menu can be any one of above described interacting methods in the present disclosure.

An implementing manner of the operation program for shortcut panels of the computer-readable storage medium of the present disclosure can make reference to at least one of the embodiments of the interacting method for sidebar menu, and the details of which are omitted herein.

It should be noted that, in this disclosure, the terms "including", "incorporating" or any other variants thereof are intended to cover non-exclusive inclusion, so that a process, method, article or device including a series of elements includes not only those listed elements, but also other elements not explicitly listed, or elements inherent to such a process, method, article, or device. Without specified restrictions, an element limited by the sentence "including a ..." does not exclude that there are other identical elements in the process, method, article, or device that includes the element. The sequence numbers of the foregoing embodiments of the present disclosure are for description only, and do not represent the superiority or inferiority of the embodiments.

Through the description of the above embodiments, those skilled in the art can clearly understand that the interacting methods in the above embodiments can be implemented by means of software plus a necessary universal hardware platform, and of course, also by hardware. Based on such an understanding, the technical solution of the present invention in essence or a part that contributes to the existing technology can be embodied in the form of a software product, which is stored in a storage medium (such as ROM / RAM, magnetic disk, The optical disc) and includes several instructions for causing a terminal device (which may be a mobile phone, a computer, a server, a device, or a network device, etc.) to execute the interacting methods described in the embodiments of the present invention.

The technical solutions in the embodiments of the present application have been clearly and completely described in conjunction with the drawings in the embodiments of the present disclosure. Obviously, the embodiments described are some but not all embodiments of the invention. All other embodiments obtained by those skilled in the art based on the embodiments of the present disclosure without creative efforts are within the scope of the present application.

## Claims

1. An interacting method for sidebar menu applied in a mobile terminal, **characterized by** comprising:
displaying a first shortcut panel on a display of the mobile terminal upon receiving a first triggering instruction, the first shortcut panel being configured to display first shortcut button icons; and
displaying a second shortcut panel corresponding to the first shortcut panel upon receiving a second triggering instruction, the second shortcut panel being configured to display second shortcut button icons, the second shortcut button icons associated with the first shortcut button icons.

2. The interacting method of claim 1, **characterized in that**, the second shortcut button icons comprise to-be-added button icons and to-be deleted button icons, after displaying the second panel as receiving the first triggering instruction, the interacting method further comprises:
adding a to-be-added button icon upon receiving an adding instruction of adding a shortcut button icon; or
adjusting a displaying position of a to-be-deleted shortcut button icons upon receiving an adjusting instruction of adjusting a displaying position of a shortcut button icon.

3. The interacting method of claim 2, **characterized in that**, the second shortcut panel comprises a first region and a second region, the first region is configured to display the to-be-deleted button icons, and the second region is configured to display the to-be-added button icons, the adding step of adding a to-be-added button icon further comprises:
displaying the to-be-added button icon of the second region in the first region upon receiving the adding instruction, thereby the to-be-added button icon displays as a to-be-deleted button icon.

4. The interacting method of claim 3, **characterized in that**, after the to-be-added button icon displays on the first region, the interacting method further comprises:
displaying the to-be-added button icon on the first shortcut panel.

5. The interacting method of claim 3, **characterized by characterized by** further comprising:
deleting a to-be-deleted shortcut button icon of the first region and displaying the to-be-deleted shortcut button icon in the second region upon receiving a deleting instruction of deleting a to-be-deleted shortcut button icon.

6. The interacting method of claim 3, **characterized in that**, the adjusting operation of adjusting a displaying position of a to-be-deleted button icon further comprises:
obtaining a stop position of the to-be-deleted shortcut button icon where a dragging operation to drag the to-be-deleted shortcut button icon stops; and
adjusting the displaying position of the to-be-deleted shortcut button according to the stop position.

7. The interacting method of claim 1, **characterized by** further comprising:
receiving a retracting instruction of retracting the second shortcut panel; and
hiding the second shortcut panel and displaying the first shortcut panel upon receiving the retracting instruction.

8. The interacting method of claim 7, **characterized in that**, the retracting instruction comprises at least one selected from a group consisting of:
an exit instruction triggered by operating an exit mark, the exit mark being configured to trigger exiting the second shortcut panel; and
a save instruction triggered by operating a save mark, the save instruction being configured to trigger saving modifications to the shortcut button icons and exiting the second shortcut panel.

9. The interacting method of claim 1, **characterized in that**, shortcut buttons corresponding to the first shortcut button icons comprise application buttons and function buttons, the application buttons comprise system application buttons and other applications other than the system application buttons, the function buttons comprise system application function buttons and other application function button other than the system application function buttons, after the displaying of the first shortcut panel, the interacting method further comprises:
displaying an application interface corresponding to an application button upon receiving a triggering instruction of triggering the application button; and
displaying a function interface corresponding to a function button upon receiving a triggering instruction of triggering the function button.

10. The interacting method of claim 1, **characterized in that**, the first shortcut panel and the second shortcut panel are displayed at least partially overlapped.

11. The interacting method of claim 10, **characterized by** further comprising:
hiding the first shortcut panel and editing at least one of the second shortcut button icons in the second shortcut panel; or
displaying the first short panel upon exiting an editing mode of editing the at least one of the second shortcut button icons in the second shortcut panel.

12. The interacting method of claim 10, **characterized in that**, the first shortcut panel comprises at least a third region and a fourth region, the third region is configured to display at least one function button icon or at least one application button icon, the fourth region being is configured to be an entrance to the second shortcut panel; the interacting method further comprises:
activating a function corresponding to the function button icon or an application corresponding to the application button icon upon receiving a first instruction applied on the function button icon or the application button icon; and
displaying the second shortcut panel upon receiving a second instruction applied on the fourth region.

13. The interacting method of claim 1, **characterized in that**, the first shortcut panel comprises a fifth region for displaying at least one function button icon or at least one application button icon.

14. The interacting method of claim 13, **characterized in that**, attributes of the function button icons or application button icons displayed in the third region and the fifth region are different;
or attributes of the function button icons or application button icons displayed in the third region and the fifth region are the same.

15. The interacting method of claim 13, **characterized by** further comprising:
hiding remaining regions comprising the fourth region upon receiving a selection operation instruction applied on the fifth region or the third region.

16. The interacting method of claim 12, **characterized by** further comprising:
hiding the first shortcut panel upon receiving the second instruction.

17. The interacting method of claim 1, **characterized by** further comprising:
obtaining currently displayed information of the first shortcut panel; and
displaying an editing button on the first shortcut panel in response to a determination that the currently displayed information comprises preset information.

18. The interacting method of claim 17, **characterized by** further comprising:
displaying the second shortcut panel in the first shortcut panel or at least partially overlapped on the first shortcut panel upon receiving a click operation on the editing button.

19. The interacting method of claim 3, **characterized by** further comprising:
displaying a to-be-added shortcut button icon in an unusable region of the second region after the to-be-added shortcut button icon is added in the first region.

20. The interacting method of claim 10, **characterized in that**,
the first shortcut panel is hidden, reduced in size or adjusted in position during operation of users on the second shortcut panel.

21. An interacting method for sidebar menu applied in a mobile terminal, comprising:
obtaining a current display mode of the mobile terminal according to an instruction of displaying a shortcut panel; and
displaying the shortcut panel according to the current display mode, wherein the shortcut panel is a regular pattern.

22. The interacting method of claim 21, **characterized in that**,
the shortcut panel is composed of a plurality of polygonal button icons, at least two of the multiple polygonal button icons are symmetrical, and displaying information of the shortcut panel comprises at least one selected from a group consisting of: a displaying position of the shortcut panel, a quantity of the polygonal button icons, displaying information of each of the polygonal button icons, and an arrangement order of the polygonal button icons.

23. The interacting method of claim 21, **characterized in that**,
only some of the plurality of polygonal button icons are displayed each time.

24. The interacting method of claim 23, **characterized by** further comprising:
hiding displayed ones of the plurality of polygonal button icons and displaying hidden ones of the plurality of polygonal button icons according to a rotation operation applied on the displayed ones.

25. The interacting method of claim 24, **characterized in that**,
one of the displayed ones is rotated by the rotation operation, or some of the displayed ones are rotated by the rotation operation.

26. The interacting method of claim 23, **characterized in that**,
in determining that only one of two symmetrical polygonal button icons is displayed, functions corresponding to the symmetrical polygonal button icons are related to each other.

27. The interacting method of claim 23, **characterized in that**,
in determining that only one of two symmetrical polygonal button icons is displayed, an additional or related function is displayed in a reserved position of the displayed one.

28. The interacting method of any one of claims 27, **characterized in that**,
the current display mode is at least one selected from a group consisting of: a reading mode, a photographing mode, a video mode, and a telephone mode, displaying the shortcut panel comprises:
determining a displaying position of the shortcut panel according to the current display mode; and
displaying the shortcut panel according to the displaying position.

29. The interacting method of claim 21, **characterized in that**,
the shortcut panel is a three-dimensional magic cube.

30. The interacting method of claim 29, **characterized in that**, the current display mode is to display an application interface, displaying the shortcut panel comprises:
determining at least one first target panel in magic cube panels of the three-dimensional magic cube; and
displaying the at least one first target panel.

31. The interacting method of claim 30, **characterized in that**, before obtaining a current display mode, the interacting method comprises:
disposing at least one button icon corresponding to at least one application or function on the three-dimensional magic cube according to a preset operation; and
after the displaying of the at least one first target panel, the interacting method comprises:
obtaining and activating an application or a function corresponding to the first target panel according to another preset operation applied on the at least one first target panel.

32. The interacting method of claim 30, **characterized in that**, displaying the at least one first target panel comprises:
obtaining degrees of association between the magic cube panels and the application interface;
determining the at least one first target panel according to the degrees of association; and
displaying the at least one first target panel.

33. An apparatus comprising a memory, a processor and an operation program for shortcut panels stored in the memory, the operation program implementing an interacting method for sidebar menu as claimed in claim 1 when being executed by the processor.

34. A computer-readable storage medium, the characterized storage medium being configured to storing an operation program for shortcut panels, the operation program implementing an interacting method for sidebar menu as claimed in claim 1 when being executed by a processor.
